# EUROPEAN PATENT APPLICATION

(11) **EP 4 797 697 A1**
(43) Date of publication of application: **26.08.2026**
(21) Application number: 24880121.9
(22) Date of filing: 16.10.2024
(51) Int. Cl.: H04N 19/587, H04N 19/132, H04N 19/172

(54) **DECODING METHOD, ENCODING METHOD AND METHOD FOR TRANSMITTING IMAGE INFORMATION**

(30) Priority: 17.10.2023 US 202363544449 P
(71) Applicant: LG Electronics Inc., Yeongdeungpo-gu Seoul 07336 (KR)
(72) Inventor: KIM, Chulkeun, Seoul 06772 (KR); TAN, Hendry, Seoul 06772 (KR); LIM, Jaehyun, Seoul 06772 (KR)
(74) Representative: Maikowski & Ninnemann Patentanwälte Partnerschaft mbB
(86) International application number: PCT/KR2024/015704
(87) International publication number: WO 2025/084784

(57) **Abstract**

A method of decoding an image comprises obtaining encoder optimization information; determining a type of encoder optimization based on the encoder optimization information; and decoding the image based on the type of encoder optimization, wherein the encoder optimization information may include information on an optimization type indicating the type of encoder optimization, and information on a temporal resampling type indicating whether temporal resampling is one of subsampling or upsampling.

## Description

### [Technical Field]

The present disclosure relates to a decoding method, an encoding method, and a method for transmitting image information, and more particularly, to a method for optimizing encoding and decoding of an image according to a reception target or a reception purpose of the image.

### [Background Art]

Recently, demand for high-resolution and high-quality images, such as HD (High Definition) images and UHD (Ultra High Definition) images, has been increasing in various fields. As image data becomes higher in resolution and quality, the amount of transmitted information or the bit amount relatively increases compared to conventional image data. The increase in the amount of transmitted information or the bit amount causes an increase in transmission cost and storage cost.

Accordingly, there is a need for a high-efficiency image compression technology for effectively transmitting, storing, and reproducing information of high-resolution and high-quality images.

### [Disclosure]

### [Technical Problem]

The present disclosure is intended to provide a method and/or an apparatus for optimizing encoding and decoding of an image according to a reception target or a reception purpose of the image.

The present disclosure is also intended to provide a method and/or an apparatus for optimizing temporal sampling of an image according to a reception target or a reception purpose of the image.

### [Technical Solution]

According to an aspect of the present disclosure, a method of decoding an image comprises obtaining encoder optimization information; determining a type of encoder optimization based on the encoder optimization information; and decoding the image based on the type of encoder optimization, wherein the encoder optimization information may include information on an optimization type indicating the type of encoder optimization, and information on a temporal resampling type indicating whether temporal resampling is one of subsampling or upsampling.

According to an aspect of the present disclosure, an apparatus for decoding an image comprises a memory and a processor connected to the memory, wherein the processor is configured to obtain encoder optimization information, determine a type of encoder optimization based on the encoder optimization information, and decode the image based on the type of encoder optimization, wherein the encoder optimization information may include information on an optimization type indicating the type of encoder optimization, and information on a temporal resampling type indicating whether temporal resampling is one of subsampling or upsampling.

Based on a value of the information on the temporal resampling type being 0, the temporal resampling may be determined as the subsampling, and based on a value of the information on the temporal resampling type being 1, the temporal resampling may be determined as the upsampling.

The information on the temporal resampling type may be obtained based on the information on the optimization type.

The information on the temporal resampling type may be obtained based on a value of a temporal resampling variable, and the value of the temporal resampling variable may be derived based on the information on the optimization type and a predefined bitmask.

The encoder optimization information may further include information on a number of pictures indicating the number of pictures excluded or added by the temporal resampling.

When the temporal resampling is subsampling, the number of pictures excluded by the temporal resampling may be determined based on the information on the number of pictures, and when the temporal resampling is upsampling, the number of pictures added by the temporal resampling may be determined based on the information on the number of pictures.

The information on the number of pictures may be obtained based on the information on the optimization type.

According to an aspect of the present disclosure, a method of encoding an image comprises determining a type of encoder optimization; encoding the image based on the type of encoder optimization; and encoding encoder optimization information based on the type of encoder optimization, wherein the encoder optimization information may include information on an optimization type indicating the type of encoder optimization, and information on a temporal resampling type indicating whether temporal resampling is one of subsampling or upsampling.

According to an aspect of the present disclosure, an apparatus for encoding an image comprises a memory and a processor connected to the memory, wherein the processor is configured to determine a type of encoder optimization, encode the image based on the type of encoder optimization, and encode encoder optimization information based on the type of encoder optimization, wherein the encoder optimization information may include information on an optimization type indicating the type of encoder optimization, and information on a temporal resampling type indicating whether temporal resampling is one of subsampling or upsampling.

A value of 0 of the information on the temporal resampling type may indicate that the temporal resampling is the subsampling, and a value of 1 of the information on the temporal resampling type may indicate that the temporal resampling is the upsampling.

The information on the temporal resampling type may be encoded based on the information on the optimization type.

The encoder optimization information may further include information on the number of pictures indicating the number of pictures excluded or added by the temporal resampling.

Based on the temporal resampling being subsampling, the information on the number of pictures may indicate the number of pictures excluded by the temporal resampling, and based on the temporal resampling being upsampling, the information on the number of pictures may indicate the number of pictures added by the temporal resampling.

The information on the number of pictures may be encoded based on the information on the optimization type.

According to an aspect of the present disclosure, a method of transmitting a bitstream including image information comprises determining a type of encoder optimization; encoding the image information based on the type of encoder optimization; encoding encoder optimization information based on the type of encoder optimization; and transmitting a bitstream including the encoded encoder optimization information and the image information, wherein the encoder optimization information may include information on an optimization type indicating the type of encoder optimization, and information on a temporal resampling type indicating whether temporal resampling is one of subsampling or upsampling.

According to an aspect of the present disclosure, an apparatus for transmitting a bitstream including image information comprises a processor and a transmitter connected to the processor, wherein the processor is configured to determine a type of encoder optimization, encode the image information based on the type of encoder optimization, and encode encoder optimization information based on the type of encoder optimization, and the transmitter is configured to transmit a bitstream including the encoded encoder optimization information and the image information, wherein the encoder optimization information may include information on an optimization type indicating the type of encoder optimization, and information on a temporal resampling type indicating whether temporal resampling is one of subsampling or upsampling.

According to an aspect of the present disclosure, a storage medium storing a bitstream including image information may store a bitstream generated by determining a type of encoder optimization, encoding the image information based on the type of encoder optimization, encoding encoder optimization information based on the type of encoder optimization, and storing a bitstream including the encoded encoder optimization information and the image information, wherein the encoder optimization information may include information on an optimization type indicating the type of encoder optimization, and information on a temporal resampling type indicating whether temporal resampling is one of subsampling or upsampling.

### [Advantageous Effects]

According to the present disclosure, a method and/or an apparatus for optimizing encoding and decoding of an image according to a reception target or a reception purpose of the image may be provided.

According to the present disclosure, a method and/or an apparatus for optimizing temporal sampling of an image according to a reception target or a reception purpose of the image may be provided.

The effects obtainable from the present disclosure are not limited to those described above, and other effects not mentioned above will be clearly understood by those skilled in the art from the following description.

### [Description of Drawings]

FIG. 1 is a diagram schematically showing a VCM system to which embodiments of the present disclosure may be applied.
FIG. 2 is a diagram schematically showing a VCM pipeline structure to which embodiments of the present disclosure may be applied.
FIG. 3 is a diagram schematically showing an image/video encoder to which embodiments of the present disclosure may be applied.
FIG. 4 is a diagram schematically showing an image/video decoder to which embodiments of the present disclosure may be applied.
FIG. 5 is a flowchart schematically showing a feature/feature map encoding procedure to which embodiments of the present disclosure may be applied.
FIG. 6 is a flowchart schematically showing a feature/feature map decoding procedure to which embodiments of the present disclosure may be applied.
FIG. 7 is a diagram illustrating an example of a feature extraction method using a feature extraction network 700.
FIG. 8A is a diagram illustrating data distribution characteristics of a video source.
FIG. 8B is a diagram illustrating data distribution characteristics of a feature set.
FIG. 9 is a diagram illustrating transform and inverse transform processes to which embodiments of the present disclosure are applicable.
FIG. 10 is a diagram illustrating a quantization group according to an embodiment of the present disclosure.
FIG. 11 is a block diagram illustrating context-adaptive binary arithmetic coding (CABAC) for encoding one syntax element.
FIGS. 12 and 13 are diagrams illustrating an entropy encoding procedure.
FIGS. 14 and 15 are diagrams illustrating an entropy decoding procedure.
FIG. 16 is a diagram showing an example of a video coding for machines (VCM) layer architecture.
FIG. 17 is a diagram showing an example of a bitstream composed of encoded abstracted features and neural network abstraction layer (NNAL) information.
FIG. 18 is a diagram illustrating encoding optimization and the use of an encoded bitstream in accordance with a purpose to which an embodiment of the present disclosure is applicable.
FIG. 19 is a diagram illustrating a decoding method according to an embodiment of the present disclosure.
FIG. 20 is a diagram illustrating an encoding method according to an embodiment of the present disclosure.
FIG. 21 is a diagram showing an example of a content streaming system to which embodiments of the present disclosure may be applied.
FIG. 22 is a diagram showing another example of a content streaming system to which embodiments of the present disclosure may be applied.

### [Modes of the Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

The present disclosure may be applied to a method disclosed in the Versatile Video Coding (VVC) standard and/or the Video Coding for Machines (VCM) standard. In addition, the present disclosure may be applied to a method disclosed in the essential video coding (EVC) standard, the AOMedia Video 1 (AV1) standard, the 2nd generation of audio video coding standard (AVS2) or the next-generation video/image coding standard (e.g., H.267 or H.268, etc.).

The present disclosure presents various embodiments related to video/image coding, and unless otherwise stated, the embodiments may be performed in combination with each other. In the present disclosure, "video" may refer to a set of images in sequence over time. "Image" may be information generated by artificial intelligence (AI). Input information used in a process in which AI performs a series of tasks, information generated in an information processing process and output information may be used as an image. In the present disclosure, "picture" generally refers to a unit representing a single image at a specific point in time and a slice/a tile is an encoding unit that constructs a part of a picture. One picture may be composed of at least one slice/tile. In addition, a slice/a tile may include at least one coding tree unit (CTU). The CTU may be partitioned into at least one CU. A tile is a rectangular area existing within a specific tile row and a specific tile column within a picture, and may be composed of a plurality of CTUs. A tile column may be defined as a rectangular area of CTUs, and may have the same height as the height of a picture and have a width specified by a syntax element signaled from a bitstream part such as a picture parameter set. A tile row may be defined as a rectangular area of CTUs, and may have the same width as the width of a picture and a height specified by a syntax element signaled from a bitstream part such as a picture parameter set. A tile scan is a predetermined sequential ordering method of CTUs that partition a picture. Here, CTUs may be sequentially ordered according to a CTU raster scan within a tile, and tiles within a picture may be sequentially ordered according to raster scan order of tiles in a picture. A slice may include an integer number of complete tiles or an integer number of sequential complete CTU rows within a tile of a picture. A slice may be included exclusively in a single NAL unit. One picture may be composed of at least one tile group. One tile group may include at least one tile. A brick may represent a rectangular area of CTU rows within a tile in a picture. A tile may include at least one brick. A brick may represent a rectangular area of CTU rows within a tile. One tile may be partitioned into a plurality of bricks, and each brick may include at least one CTU row belonging to a tile. A tile that is not partitioned into a plurality of bricks may also be treated as a brick.

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In an embodiment, especially when applied to VCM, a pixel/a pixel value may represent the pixel/pixel value of a component generated through the independent information or combination, synthesis and analysis of each component when there is a picture composed of a set of components with different characteristics and meaning. For example, in RGB input, it may represent only the pixel/pixel value of R, may represent only the pixel/pixel value of G, or may represent only the pixel/pixel value of B. For example, it may represent only the pixel/pixel value of a luma component synthesized by using R, G and B components. For example, it may represent only the pixel/pixel value of information or an image extracted through the analysis of R, G and B components.

In the present disclosure, "unit" may refer to a basic unit of image processing. A unit may include at least one of a specific area of a picture or information related to the area. One unit may include one luma block and two chroma (e.g., Cb, Cr) blocks. Depending on the context, the term "unit" may be used interchangeably with "sample array," "block," "area," etc. In general, an M×N block may include a set (or array) of samples (or a sample array) or a set (or array) of transform coefficients, consisting of M columns and N rows. In an embodiment, in particular, when it is applied to VCM, a unit may represent a basic unit including information for performing a specific task.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In addition, in the present disclosure, "current block" may refer to "luma block of current block" unless it is explicitly stated as a chroma block. "Chroma block of current block" may be expressed by explicitly including an explicit description of a chroma block such as "chroma block" or "current chroma block".

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

The present disclosure relates to video/image coding for machines (VCM).

VCM refers to a compression technology that encodes/decodes a part of a source image/video or information obtained from a source image/video for the purpose of machine vision. In VCM, an encoding/decoding target may be referred to as a feature. A feature may refer to information extracted from a source image/video based on a task purpose, a requirement, a neighboring environment, etc. A feature may have a different information form from a source image/video, and accordingly, a feature compression method and expression format may also be different from a video source.

VCM may be applied to various application fields. For example, in a surveillance system that recognizes and tracks objects or persons, VCM may be used to store or transmit object recognition information. In addition, in an intelligent transportation or smart traffic system, VCM may be used to transmit vehicle location information collected from GPS, sensing information collected from LIDAR, radar, etc. and various vehicle control information to other vehicles or infrastructure. In addition, in a smart city field, VCM may be used to perform the individual task of an interconnected sensor node or device.

The present disclosure provides various embodiments regarding feature/feature map coding. Unless otherwise specifically stated, embodiments of the present disclosure may be implemented individually or may be implemented in combination of at least two.

### Overview of VCM System

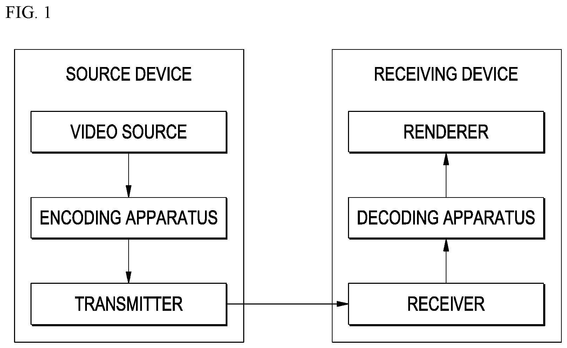

FIG. 1 is a diagram schematically showing a VCM system to which embodiments of the present disclosure may be applied.

Referring to FIG. 1, a VCM system may include an encoding apparatus 10 and a decoding apparatus 20.

An encoding apparatus 10 may compress/encode a feature/a feature map extracted from a source image/video to generate a bitstream, and transmit a generated bitstream to a decoding apparatus 20 through a storage medium or a network. An encoding apparatus 10 may also be referred to as a feature encoding apparatus. In a VCM system, a feature/a feature map may be generated in each hidden layer of a neural network. The size and number of channels of a generated feature map may vary depending on the type of a neural network or the location of a hidden layer. In the present disclosure, a feature map may be referred to as a feature set, and a feature or a feature map may be referred to as 'feature information'.

An encoding apparatus 10 may include a feature obtainer 11, an encoder 12 and a transmitter 13.

A feature obtainer 11 may obtain a feature/a feature map for a source image/video. According to an embodiment, a feature obtainer 11 may obtain a feature/a feature map from an external device, e.g., a feature extraction network. In this case, a feature obtainer 11 performs a feature reception interface function. Alternatively, a feature obtainer 11 may obtain a feature/a feature map by executing a neural network (e.g., CNN, DNN, etc.) by using a source image/video as an input. In this case, a feature obtainer 11 performs a feature extraction network function.

According to an embodiment, an encoding apparatus 10 may further include a source image generator (not shown) for obtaining a source image/video. A source image generator may be implemented by using an image sensor, a camera module, etc., and may obtain a source image/video through a process of capturing, synthesizing or generating an image/a video. In this case, a generated source image/video may be transmitted to a feature extraction network and used as input data for extracting a feature/a feature map.

An encoder 12 may encode a feature/a feature map obtained by a feature obtainer 11. An encoder 12 may perform a series of procedures such as prediction, transform, quantization, etc. to increase encoding efficiency. Encoded data (encoded feature/feature map information) may be output in the form of a bitstream. A bitstream including encoded feature/feature map information may be referred to as a VCM bitstream.

The transmitter 13 may obtain a feature/a feature map information or data output in the form of a bitstream, and may transmit the obtained information or data to a decoding apparatus 20 or another external object through a digital storage medium or a network in the form of a file or streaming. Here, the digital storage medium may include various storage medium such as USB, SD, CD, DVD, Blu-ray, HDD, SSD, etc. The transmitter 13 may include elements for generating a media file with a predetermined file format, or elements for transmitting data through a broadcasting/communication network. The transmitter 13 may be provided as a transmission device separate from the encoder 12, and in this case, the transmission device may include at least one processor for obtaining a feature/a feature map information or data output in the form of a bitstream, and a transmitter for transmitting it in the form of a file or streaming.

A decoding apparatus 20 may obtain feature/feature map information from an encoding apparatus 10 and reconstruct a feature/a feature map based on obtained information.

A decoding apparatus 20 may include a receiver 21 and a decoder 22.

A receiver 21 may receive a bitstream from an encoding apparatus 10 and obtain feature/feature map information from a received bitstream to transmit it to a decoder 22.

A decoder 22 may decode a feature/a feature map based on obtained feature/feature map information. A decoder 22 may perform a series of procedures such as dequantization, inverse transform, prediction, etc. corresponding to the operation of an encoder 14 to increase decoding efficiency.

According to an embodiment, a decoding apparatus 20 may further include a task analysis/rendering unit 23.

A task analysis/rendering unit 23 may perform task analysis based on a decoded feature/feature map. In addition, a task analysis/rendering unit 23 may render a decoded feature/feature map into a form suitable for performing a task. Based on a task analysis result and a rendered feature/feature map, various machine(-oriented) tasks may be performed.

Accordingly, a VCM system may encode/decode a feature extracted from a source image/video according to a user and/or machine request, a task purpose and a neighboring environment, and perform various machine(-oriented) tasks based on a decoded feature. A VCM system may also be implemented by extending/redesigning a video/image coding system, and may perform various encoding/decoding methods defined in the VCM standard.

### VCM Pipeline

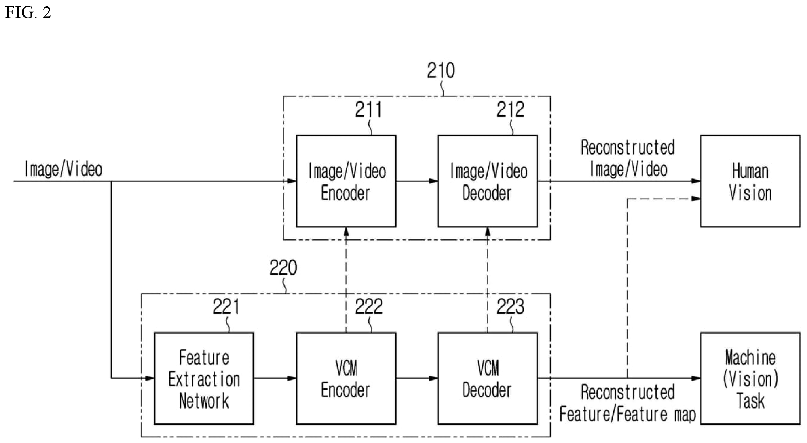

FIG. 2 is a diagram schematically showing a VCM pipeline structure to which embodiments of the present disclosure may be applied.

Referring to FIG. 2, a VCM pipeline 200 may include a first pipeline 210 for encoding/decoding an image/a video and a second pipeline 220 for encoding/decoding a feature/a feature map. In the present disclosure, a first pipeline 210 may be referred to as a video codec pipeline, and a second pipeline 220 may be referred to as a feature codec pipeline.

A first pipeline 210 may include a first stage 211 for encoding an input image/video and a second stage 212 for decoding an encoded image/video to generate a reconstructed image/video. A reconstructed image/video may be used for human viewing, i.e., human vision.

A second pipeline 220 may include a third stage 221 for extracting a feature/a feature map from an input image/video, a fourth stage 222 for encoding an extracted feature/feature map and a fifth stage 223 for decoding an encoded feature/feature map to generate a reconstructed feature/feature map. A reconstructed feature/feature map may be used for a machine (vision) task. Here, a machine (vision) task may refer to a task in which an image/a video is consumed by a machine. A machine (vision) task may be applied to a service scenario such as, for example, surveillance, intelligent transportation, smart city, intelligent industry, intelligent content, etc. According to an embodiment, a reconstructed feature/feature map may also be used for human vision.

According to an embodiment, a feature/a feature map encoded in a fourth stage 222 may be transmitted to a first stage 221 and used to encode an image/a video. In this case, an additional bitstream may be generated based on an encoded feature/feature map, and a generated additional bitstream may be transmitted to a second stage 222 and used to decode an image/a video.

According to an embodiment, a feature/a feature map decoded in a fifth stage 223 may be transmitted to a second stage 222 and used to decode an image/a video.

Although FIG. 2 shows a case in which a VCM pipeline 200 includes a first pipeline 210 and a second pipeline 220, this is just exemplary and the embodiments of the present disclosure are not limited thereto. For example, a VCM pipeline 200 may include only a second pipeline 220 or a second pipeline 220 may be extended to a plurality of feature codec pipelines.

Meanwhile, in a first pipeline 210, a first stage 211 may be performed by an image/video encoder, and a second stage 212 may be performed by an image/video decoder. In addition, in a second pipeline 220, a third stage 221 may be performed by a VCM encoder (or, a feature/feature map encoder), and a fourth stage 222 may be performed by a VCM decoder (or, a feature/feature map decoder). Hereinafter, an encoder/decoder structure is described in detail.

### Encoder

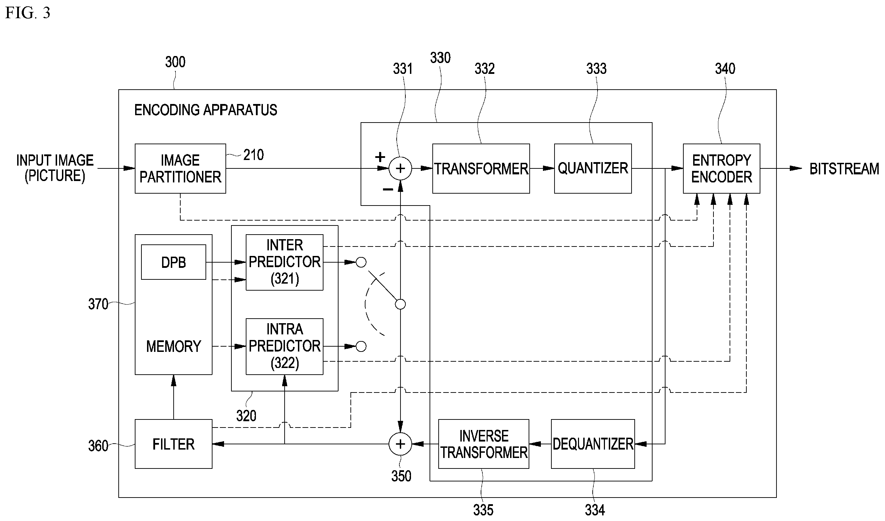

FIG. 3 is a diagram schematically showing an image/video encoder to which embodiments of the present disclosure may be applied.

Referring to FIG. 3, an image/video encoder 300 may include an image partitioner 310, a predictor 320, a residual processor 330, an entropy encoder 340, an adder 350, a filter 360 and a memory 370. A predictor 320 may include an inter predictor 321 and an intra predictor 322. A residual processor 330 may include a transformer 332, a quantizer 333, a dequantizer 334 and an inverse transformer 335. A residual processor 330 may further include a subtractor 331. An adder 350 may be referred to as a reconstructor or a reconstructed block generator. An image partitioner 310, a predictor 320, a residual processor 330, an entropy encoder 340, an adder 350 and a filter 360 described above may be configured by at least one hardware component (e.g., an encoder chipset or a processor) according to an embodiment. In addition, a memory 370 may include a decoded picture buffer (DPB) and may be configured by a digital storage medium. A hardware component described above may further include a memory 370 as an internal/external component.

An image partitioner 310 may partition an input image (or picture, frame) input to an image/video encoder 300 into at least one processing unit. As an example, a processing unit may be referred to as a coding unit (CU). A coding unit may be recursively partitioned from a coding tree unit (CTU) or a largest coding unit (LCU) according to a quad-tree binary-tree ternary-tree (QTBTTT) structure. For example, one coding unit may be partitioned into a plurality of coding units of deeper depth based on a quad-tree structure, a binary-tree structure and/or a ternary structure. In this case, for example, a quad-tree structure may be applied first and a binary tree structure and/or a ternary structure may be applied later. Alternatively, a binary tree structure may be applied first. An image/video coding procedure according to the present disclosure may be performed based on a final coding unit that is no longer partitioned. In this case, the maximum coding unit may be used as a final coding unit based on coding efficiency according to image characteristics, etc. or if necessary, a coding unit may be recursively partitioned into coding units of deeper depth and a coding unit of an optimal size may be used as a final coding unit. Here, a coding procedure may include a procedure such as prediction, transform, reconstruction, etc. described later. As another example, a processing unit may further include a prediction unit (PU) or a transform unit (TU). In this case, a prediction unit and a transform unit may be divided or partitioned from a final coding unit described above, respectively. A prediction unit may be a unit of sample prediction, and a transform unit may be a unit for deriving a transform coefficient and/or a unit for deriving a residual signal from a transform coefficient.

A unit may be used interchangeably with a term such as a block, an area, etc. in some cases. In general, a MxN block may represent a set of transform coefficients or samples consisting of M columns and N rows. A sample may generally represent a pixel or a pixel value, or may represent only the pixel/pixel value of a luma component, or may represent only the pixel/pixel value of a chroma component. A sample may be used as a term corresponding to a pixel or a pel.

An image/video encoder 300 may generate a residual signal (a residual block, a residual sample array) by subtracting a prediction signal (a predicted block, a prediction sample array) output from an inter predictor 321 or an intra predictor 322 from an input image signal (an original block, an original sample array), and a generated residual signal is transmitted to a transformer 332. In this case, as shown, a unit that subtracts a prediction signal (a prediction block, a prediction sample array) from an input image signal (an original block, an original sample array) within an image/video encoder 300 may be referred to as a subtractor 331. A predictor may perform prediction on a block to be processed (hereinafter, referred to as a current block) and generate a predicted block including prediction samples for a current block. A predictor may determine whether intra prediction or inter prediction is applied in a unit of a current block or a CU. A predictor may generate various information related to prediction such as prediction mode information, etc. and transmit it to an entropy encoder 340. Prediction-related information may be encoded by an entropy encoder 340 and may be output in the form of a bitstream.

An intra predictor 322 may predict a current block by referring to samples within a current picture. In this case, referenced samples may be located in the neighboring area of a current block or may be located farther away according to a prediction mode. In intra prediction, prediction modes may include a plurality of non-directional modes and a plurality of directional modes. A non-directional mode may include, for example, a DC mode and a planar mode. A directional mode may include, for example, 33 directional prediction modes or 65 directional prediction modes according to the granularity of a prediction direction. However, this is an example, and a greater or fewer number of directional prediction modes may be used according to a configuration. An intra predictor 322 may also determine a prediction mode applied to a current block by using a prediction mode applied to a neighboring block.

An inter predictor 321 may derive a predicted block for a current block based on a reference block (a reference sample array) specified by a motion vector on a reference picture. In this case, in order to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on an inter prediction direction (L0 prediction, L1 prediction, Bi prediction, etc.). In inter prediction, neighboring block may include spatial neighboring block present within the current picture and temporal neighboring block present in the reference picture. A reference picture including a reference block and a reference picture including a temporal neighboring block may be the same or different. A temporal neighboring block may be referred to as a collocated reference block or a collocated CU (colCU), and a reference picture including a temporal neighboring block may be referred to as a collocated picture (colPic). For example, an inter predictor 321 may construct a motion information candidate list based on neighboring blocks and generate information indicating which candidate is used to derive the motion vector and/or reference picture index of a current block. Inter prediction may be performed based on various prediction modes, and for example, in a skip mode and a merge mode, an inter predictor 321 may use the motion information of a neighboring block as the motion information of a current block. In a skip mode, unlike a merge mode, a residual signal may not be transmitted. In a motion vector prediction (MVP) mode, the motion vector of a neighboring block may be used as a motion vector predictor, and the motion vector of a current block may be indicated by signaling a motion vector difference.

A predictor 320 may generate a prediction signal based on various prediction methods. For example, a predictor may apply intra prediction or inter prediction for prediction for one block, and may also apply both intra prediction and inter prediction simultaneously. It may be referred to as combined inter and intra prediction (CIIP). In addition, a predictor may be based on an intra block copy (IBC) prediction mode or a palette mode for prediction for a block. An IBC prediction mode or a palette mode may be used for content image/video coding, for example, such as screen content coding (SCC), etc. IBC basically performs prediction within the current picture, but since it derives a reference block within the current picture, it may operate similarly to inter prediction. In other words, IBC may use at least one of the inter prediction methods described in the present disclosure. A palette mode may be considered as an example of intra coding or intra prediction. When a palette mode is applied, a sample value within a picture may be signaled based on information related to a palette table and a palette index.

A prediction signal generated by a predictor 320 may be used to generate a reconstructed signal or to generate a residual signal. A transformer 332 may generate transform coefficients by applying a transform method to a residual signal. For example, a transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. In addition, a transform process may be applied to a pixel block of the same square size or to a non-square variable-sized block.

A quantizer 333 may quantize transform coefficients and transmit them to an entropy encoder 340, and an entropy encoder 340 may encode a quantized signal (information on quantized transform coefficients) and output it as a bitstream. Information on quantized transform coefficients may be referred to as residual information. A quantizer 333 may reorder block-shaped quantized transform coefficients in the form of a one-dimensional vector based on a coefficient scan order, and may generate information on quantized transform coefficients based on quantized transform coefficients in the form of a one-dimensional vector. An entropy encoder 340 may perform various encoding methods such as exponential Golomb, context-adaptive variable length coding (CAVLC), context-adaptive binary arithmetic coding (CABAC), etc. An entropy encoder 340 may encode not only quantized transform coefficients but also information necessary for video/image reconstruction (e.g., the value of syntax elements, etc.) together or separately. Encoded information (E.G., encoded video/image information) may be transmitted or stored in the form of a bitstream in a network abstraction layer (NAL) unit. Image/video information may further include information on various parameter sets such as an adaptation parameter set (APS), a picture parameter set (PPS), a sequence parameter set (SPS) or a video parameter set (VPS), etc. In addition, video/image information may further include general constraint information. In addition, image/video information may further include a method for generating and using encoded information, a purpose thereof, etc. In the present disclosure, information and/or syntax elements transmitted/signaled from an image/video encoder to an image/video decoder may be included in image/video information. Image/video information may be encoded through an encoding procedure described above and included in a bitstream. A bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting and/or a storage unit (not shown) for storing a signal output from an entropy encoder 340 may be constructed as an internal/external element of an image/video encoder 300 or a transmitter may be included in an entropy encoder 340.

The quantized transform coefficients output from a quantizer 333 may be used to generate a prediction signal. For example, a residual signal (a residual block or residual samples) may be reconstructed by applying dequantization and inverse transform to quantized transform coefficients through a dequantizer 334 and an inverse transformer 335. An adder 350 may generate a reconstructed signal (a reconstructed picture, a reconstructed block, a reconstructed sample array) by adding a reconstructed residual signal to a prediction signal output from an inter predictor 321 or an intra predictor 322. When there is no residual for a processing target block, such as when a skip mode is applied, a predicted block may be used as a reconstructed block. An adder 350 may be referred to as a reconstructor or a reconstructed block generator. A generated reconstructed signal may be used for intra prediction of the next processing target block within a current picture and, as described later, may also be used for inter prediction of the next picture through filtering.

Meanwhile, luma mapping with chroma scaling may be applied in a picture encoding and/or reconstruction process.

A filter 360 may apply filtering to a reconstructed signal to enhance subjective/objective image quality. For example, a filter 360 may apply various filtering methods to a reconstructed picture to generate a modified reconstructed picture, and may store a modified reconstructed picture in a memory 370, specifically in the DPB of a memory 370. Various filtering methods may include, for example, deblocking filtering, a sample adaptive offset, an adaptive loop filter, a bilateral filter, etc. A filter 360 may generate various filtering-related information and transmit it to an entropy encoder 340. The filtering-related information may be encoded by an entropy encoder 340 and output in the form of a bitstream.

A modified reconstructed picture transmitted to a memory 370 may be used as a reference picture in an inter predictor 321. Through this, it may avoid prediction mismatch on an encoder side and a decoder side and may improve encoding efficiency.

The DPB of a memory 370 may store a modified reconstructed picture for use as a reference picture in an inter predictor 321. A memory 370 may store the motion information of a block where motion information within a current picture is derived (or, encoded) and/or the motion information of blocks within an already reconstructed picture. The stored motion information may be transmitted to an inter predictor 321 for use as motion information of a spatial neighboring block or a temporal neighboring block. A memory 370 may store the reconstructed samples of reconstructed blocks in a current picture and transmit stored reconstructed samples to an intra predictor 322.

Meanwhile, a VCM encoder (or a feature/feature map encoder) may have a structure identical/similar to an image/video encoder 300 basically described by referring to FIG. 3 in that it performs a series of procedures such as prediction, transform, quantization, etc. to encode a feature/a feature map. However, a VCM encoder is different from an image/video encoder 300 in that it targets a feature/a feature map for encoding, and accordingly, it may be different in the name of each unit (or, component) (e.g., an image partitioner 310, etc.) and its specific operation details from an image/video encoder 300. The specific operation details of a VCM encoder will be described in detail later.

### Decoder

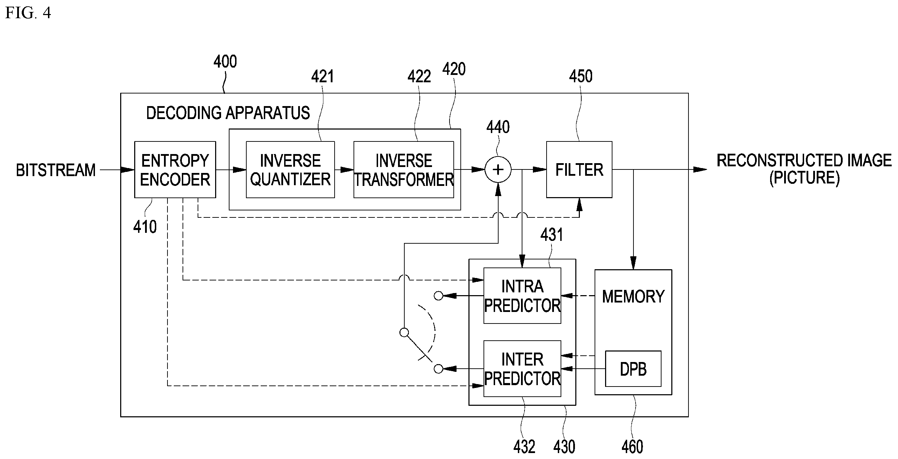

FIG. 4 is a diagram schematically showing an image/video decoder to which embodiments of the present disclosure may be applied.

Referring to FIG. 4, an image/video decoder 400 may include an entropy decoder 410, a residual processor 420, a predictor 430, an adder 440, a filter 450 and a memoery 460. A predictor 430 may include an inter predictor 431 and an intra predictor 432. A residual processor 420 may include a dequantizer 421 and an inverse transformer 422. An entropy decoder 410, a residual processor 420, a predictor 430, an adder 440 and a filter 450 described above may be configured by one hardware component (e.g., a decoder chipset or a processor) according to an embodiment. In addition, a memory 460 may include a decoded picture buffer (DPB) and may be configured by a digital storage medium. A hardware component may further include a memory 460 as an internal/external component.

When a bitstream including video/image information is input, an image/video decoder 400 may reconstruct an image/a video in response to a process in which image/video information is processed in an image/video encoder 300 of FIG. 3. For example, an image/video decoder 400 may derive units/blocks based on block partition-related information obtained from a bitstream. An image/video decoder 400 may perform decoding by using a processing unit applied in an image/video encoder. Accordingly, the processing unit of decoding may be, for example, a coding unit, and a coding unit may be partitioned according to a quad tree structure, a binary tree structure and/or a ternary tree structure from a coding tree unit or a largest coding unit. At least one transform unit may be derived from a coding unit. And, a reconstructed image signal decoded and output through an image/video decoder 400 may be played back through a playback device.

An image/video decoder 400 may receive a signal output from an encoder in FIG. 3 in the form of a bitstream, and a received signal may be decoded through an entropy decoder 410. For example, an entropy decoder 410 may parse a bitstream to derive information necessary for image reconstruction (or picture reconstruction) (e.g., video/image information). The video/image information may further include information on various parameter sets such as an adaptation parameter set (APS), a picture parameter set (PPS), a sequence parameter set (SPS), a video parameter set (VPS), etc. In addition, the video/image information may further include general constraint information. In addition, the image/video information may include the generation method, use method, purpose, etc. of decoded information. An image/video decoder 400 may decode a picture further based on information on a parameter set and/or general constraint information. The signaled/received information and/or syntax elements may be decoded through a decoding procedure and obtained from a bitstream. For example, an entropy decoder 410 may decode information in a bitstream based on a coding method such as exponential Golomb encoding, CAVLC, or CABAC, etc. and may output the values of a syntax element necessary for image reconstruction and quantized values of a transform coefficient related to a residual. More specifically, a CABAC entropy decoding method may receive a bin corresponding to each syntax element in a bitstream, determine a context model by using the information of a decoding target syntax element, the decoding information of neighboring and decoding target blocks or the information of a symbol/a bin decoded in a previous step, and predict the probability of bin occurrence according to a determined context model and perform arithmetic decoding of a bin to generate a symbol corresponding to the value of each syntax element. In this case, a CABAC entropy decoding method may update a context model by using the information of a decoded symbol/bin for the context model of the next symbol/bin after determining a context model. Among the information decoded by an entropy decoder 410, prediction-related information may be provided to a predictor (an inter predictor 432 and an intra predictor 431), and a residual value which is entropy decoded by an entropy decoder 410, i.e., quantized transform coefficients and related parameter information, may be input to a residual processor 420. A residual processor 420 may derive a residual signal (a residual block, residual samples, a residual sample array). In addition, among the information decoded by an entropy decoder 410, filtering-related information may be provided to a filter 450. Meanwhile, a receiver (not shown) that receives a signal output from an image/video encoder may be additionally constructed as an internal/external element of an image/video decoder 400 or a receiver may be a component of an entropy decoder 410. Meanwhile, an image/video decoder according to the present disclosure may also be referred to as an image/video decoding apparatus, and an image/video decoder may be divided into an information decoder (an image/video information decoder) and/or a sample decoder (an image/video sample decoder) . In this case, an information decoder may include an entropy decoder 410, and a sample decoder may include at least one of a dequantizer 321, an inverse transformer 322, an adder 440, a filter 450, a memory 460, an inter predictor 432 and an intra predictor 431.

A dequantizer 421 may dequantize quantized transform coefficients and output transform coefficients. A dequantizer 421 may reorder quantized transform coefficients in the form of a two-dimensional block. In this case, reordering may be performed based on the coefficient scan order performed in an image/video encoder. A dequantizer 321 may perform dequantization on quantized transform coefficients by using a quantization parameter (i.e., quantization step size information), and may obtain transform coefficients.

An inverse transformer 422 may perform an inverse transform on transform coefficients to obtain a residual signal (a residual block, a residual sample array).

A predictor 430 may perform prediction for a current block and generate a predicted block that includes prediction samples for a current block. A predictor may determine whether intra prediction or inter prediction is applied to a current block based on prediction-related information output from an entropy decoder 410 and may determine a specific intra/inter prediction mode (prediction method).

A predictor 420 may generate a prediction signal based on various prediction methods. For example, a predictor may apply not only intra prediction or inter prediction, but also intra prediction and inter prediction at the same time for prediction for one block. This may be called combined inter and intra prediction (CIIP). In addition, a predictor may be based on an intra block copy (IBC) prediction mode or a palette mode for prediction for a block. An IBC prediction mode or a palette mode may be used for content image/video coding of game such as screen content coding (SCC), etc. IBC basically performs prediction within a current picture, but it may be performed similarly to inter prediction in that it derives a reference block within a current picture. In other words, IBC may use at least one of the inter prediction techniques described in this document. A palette mode may be considered as an example of intra coding or intra prediction. When a palette mode is applied, information related to a palette table and a palette index may be included in image/video information and signaled.

An intra predictor 431 may predict a current block by referring to samples within a current picture. Referenced samples may be located in the neighborhood of a current block or may be located away from a current block according to a prediction mode. In intra prediction, prediction modes may include a plurality of non-directional modes and a plurality of directional modes. An intra predictor 431 may determine a prediction mode applied to a current block by using a prediction mode applied to a neighboring block.

An inter predictor 432 may derive a predicted block for a current block based on a reference block (a reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. Motion information may include a motion vector and a reference picture index. Motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, an inter predictor 432 may construct a motion information candidate list based on neighboring blocks and derive the motion vector and/or reference picture index of a current block based on received candidate selection information. Inter prediction may be performed based on various prediction modes, and prediction-related information may include information indicating an inter prediction mode for a current block.

An adder 440 may generate a reconstructed signal (a reconstructed picture, a reconstructed block, a reconstructed sample array) by adding an obtained residual signal to a prediction signal (a predicted block, a prediction sample array) output from a predictor (including an inter predictor 432 and/or an intra predictor 431). When there is no residual for a processing target block, such as when a skip mode is applied, a predicted block may be used as a reconstructed block.

An adder 440 may be referred to as a reconstructor or a reconstructed block generator. A generated reconstructed signal may be used for intra prediction of the next processing target block within a current picture, or as described later, may be output through filtering, or may be used for inter prediction of the next picture.

Meanwhile, luma mapping with chroma scaling may be applied in a picture decoding process.

A filter 450 may apply filtering to a reconstructed signal to enhance subjective/objective image quality. For example, a filter 450 may apply various filtering methods to a reconstructed picture to generate a modified reconstructed picture, and may transmit a modified reconstructed picture to a memory 460, specifically to the DPB of a memory 460. Various filtering methods may include, for example, deblocking filtering, a sample adaptive offset, an adaptive loop filter, a bilateral filter, etc.

A (modified) reconstructed picture stored in the DPB of a memory 460 may be used as a reference picture in an inter predictor 432. A memory 460 may store the motion information of a block where motion information within a current picture is derived (or decoded) and/or the motion information of blocks in an already reconstructed picture. The stored motion information may be transmitted to an inter predictor 432 to be used as motion information of a spatial neighboring block or a temporal neighboring block. A memory 460 may store the reconstructed samples of reconstructed blocks in a current picture and transmit them to an intra predictor 431.

Meanwhile, a VCM decoder (or, a feature/feature map decoder) may have a structure identical/similar to an image/video decoder 400 basically described above by referring to FIG. 4 in that it performs a series of procedures such as prediction, inverse transform, dequantization, etc. to decode a feature/a feature map. However, a VCM decoder is different from an image/video decoder 400 in that it targets a feature/a feature map for decoding, and accordingly, it may be different in the name of each unit (or, component) (e.g., DPB, etc.) and its specific operation details from an image/video decoder 400. The operation of a VCM decoder may correspond to the operation of a VCM encoder, and its specific operation details will be described in detail later.

### Feature/Feature Map Encoding Procedure

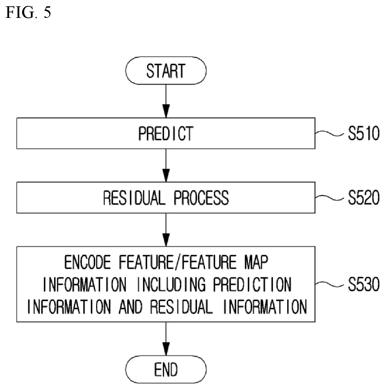

FIG. 5 is a flowchart schematically showing a feature/feature map encoding procedure to which embodiments of the present disclosure may be applied.

Referring to FIG. 5, a feature/feature map encoding procedure may include a prediction procedure S510, a residual processing procedure S520 and an information encoding procedure S530.

A prediction procedure S510 may be performed by a predictor 320 described above by referring to FIG. 3.

Specifically, an intra predictor 322 may predict a current block (i.e., a set of feature elements to be currently encoded) by referring to feature elements in a current feature/feature map. Intra prediction may be performed based on the spatial similarity of feature elements configuring a feature/a feature map. For example, feature elements included in the same region of interest (RoI) within an image/a video may be estimated to have similar data distribution characteristics. Accordingly, an intra predictor 322 may predict a current block by referring to pre-reconstructed feature elements within a region of interest including a current block. In this case, referenced feature elements may be located adjacent to a current block or may be located apart from a current block according to a prediction mode. Intra prediction modes for feature/feature map encoding may include a plurality of non-directional prediction modes and a plurality of directional prediction modes. The non-directional prediction modes may include, for example, prediction modes corresponding to the DC mode and planar mode of an image/video encoding procedure. In addition, directional modes may include, for example, prediction modes corresponding to 33 directional modes or 65 directional modes of an image/video encoding procedure. However, this is just an example, and the type and number of intra prediction modes may be configured/changed in various ways according to an embodiment

An inter predictor 321 may predict a current block based on a reference block (i.e., a set of referenced feature elements) specified by motion information on a reference feature/feature map. Inter prediction may be performed based on the temporal similarity of feature elements configuring a feature/a feature map. For example, temporally continuous features may have similar data distribution characteristics. Accordingly, an inter predictor 321 may predict a current block by referring to pre-reconstructed feature elements of a current feature and a temporally adjacent feature. In this case, motion information for specifying referenced feature elements may include a motion vector and a reference feature/feature map index. Motion information may further include information related to an inter prediction direction (e.g., L0 prediction, L1 prediction, Bi prediction, etc.). For inter prediction, a neighboring block may include a spatial neighboring block existing in a current feature/feature map and a temporal neighboring block existing in a reference feature/feature map. A reference feature/feature map including a reference block and a reference feature/feature map including a temporal neighboring block may be the same or different. A temporal neighboring block may be referred to as a collocated reference block, etc., and a reference feature/feature map including a temporal neighboring block may be referred to as a collocated feature/feature map. An inter predictor 321 may configure a motion information candidate list based on neighboring blocks and generate information indicating which candidate is used to derive the motion vector and/or reference feature/feature map index of a current block. Inter prediction may be performed based on various prediction modes, and for example, for a skip mode and a merge mode, an inter predictor 321 may use the motion information of a neighboring block as the motion information of a current block. For a skip mode, unlike a merge mode, a residual signal may not be transmitted. For a motion vector prediction (MVP) mode, the motion vector of a neighboring block may be used as a motion vector predictor, and the motion vector of a current block may be indicated by signaling a motion vector difference. A predictor 320 may generate a prediction signal based on various prediction methods in addition to intra prediction and inter prediction described above.

A prediction signal generated by a predictor 320 may be used to generate a residual signal (a residual block, residual feature elements) S520. A residual processing procedure S520 may be performed by a residual processor 330 described above by referring to FIG. 3. And, (quantized) transform coefficients may be generated through a transform and/or quantization procedure for a residual signal, and an entropy encoder 340 may encode information related to (quantized) transform coefficients as residual information in a bitstream S530. In addition, an entropy encoder 340 may encode information necessary for feature/feature map reconstruction, e.g., prediction information (e.g., prediction mode information, motion information, etc.) in addition to residual information in a bitstream.

Meanwhile, a feature/feature map encoding procedure may further include a procedure for generating a reconstructed feature/feature map for a current feature/feature map and a procedure (optional) for applying in-loop filtering to a reconstructed feature/feature map as well as a procedure S530 for encoding information for feature/feature map reconstruction (e.g., prediction information, residual information, partitioning information, etc.) and outputting it in the form of a bitstream.

A VCM encoder may derive (modified) residual feature(s) from quantized transform coefficient(s) through dequantization and inverse transform, and may generate a reconstructed feature/feature map based on prediction feature(s) and (modified) residual feature(s) which are the output of S510. A reconstructed feature/feature map generated in this way may be the same as a reconstructed feature/feature map generated by a VCM decoder. When an in-loop filtering procedure is performed on a reconstructed feature/feature map, a modified reconstructed feature/feature map may be generated through an in-loop filtering procedure on a reconstructed feature/feature map. A modified reconstructed feature/feature map may be stored in a decoded feature buffer (DFB) or a memory and then, used as a reference feature/feature map in the prediction procedure of a feature/feature map. In addition, (in-loop) filtering-related information (parameter) may be encoded and output in the form of a bitstream. Through an in-loop filtering procedure, noise that may occur during feature/feature map coding may be removed, and feature/feature map-based task performance may be improved. In addition, an in-loop filtering procedure may be performed both on an encoder side and a decoder side to guarantee the identity of prediction result, improve the reliability of feature/feature map coding and reduce the amount of data transmission for feature/feature map coding.

### Feature/Feature Map Decoding Procedure

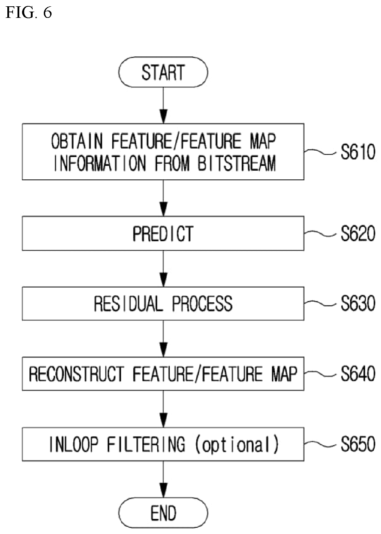

FIG. 6 is a flowchart schematically showing a feature/feature map decoding procedure to which embodiments of the present disclosure may be applied.

Referring to FIG. 6, a feature/feature map decoding procedure may include an image/video information acquisition procedure S610, a feature/feature map reconstruction procedure S620 to S640 and an in-loop filtering procedure S650 for a reconstructed feature/feature map. A feature/feature map reconstruction procedure may be performed based on a prediction signal and a residual signal obtained through the process of inter/intra prediction S620, residual processing S630 and dequantization and inverse transform for a quantized transform coefficient described in the present disclosure. A modified reconstructed feature/feature map may be generated through an in-loop filtering procedure for a reconstructed feature/feature map, and a modified reconstructed feature/feature map may be output as a decoded feature/feature map. A decoded feature/feature map may be stored in a decoded feature buffer (DFB) or a memory and then, used as a reference feature/feature map in an inter prediction procedure when decoding a feature/a feature map. In some cases, the above-described in-loop filtering procedure may be omitted. In this case, a reconstructed feature/feature map may be output as a decoded feature/feature map as it is, and may be stored in a decoded feature buffer (DFB) or a memory and then, used as a reference feature/feature map in an inter prediction procedure when decoding a feature/a feature map.

### Feature Extraction and Data Distribution Characteristic

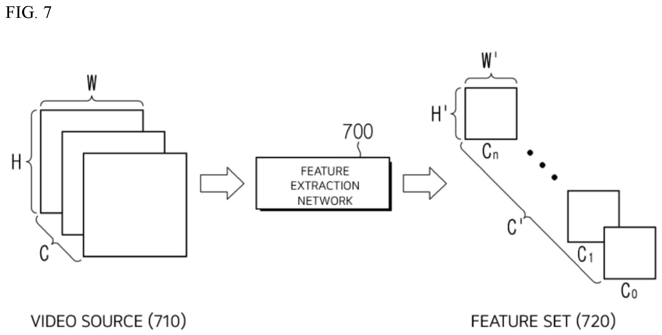

FIG. 7 is a diagram illustrating an example of a feature extraction method using a feature extraction network 700.

Referring to FIG. 7, the feature extraction network 700 may receive a video source (Image/Video, 710) and perform a feature extraction operation to output a feature set 720 of the video source 710. The feature set 720 may include a plurality of features (C0, C1, ..., Cn) extracted from the video source 710 and may be represented as a feature map. Each of the features (C0, C1, ..., Cn) may include a plurality of characteristic elements and may have different data distribution characteristics.

In FIG. 7, W, H, and C may respectively represent the width, height, and number of channels of the video source 710. Here, the number of channels C of the video source 710 may be determined based on the image format of the video source 710. For example, when the video source 710 has an RGB image format, the number of channels C of the video source 710 may be 3.

In addition, W', H', and C' may respectively represent the width, height, and number of channels of the feature set 720. The number of channels C' of the feature set 720 may be equal to the total number (n+1) of the features (C0, C1, ..., Cn) extracted from the video source 710. In one example, the number of channels C' of the feature set 720 may be greater than the number of channels C of the video source 710.

The properties (W', H', C') of the feature set 720 may vary depending on the properties (W, H, C) of the video source 710. For example, as the number of channels C of the video source 710 increases, the number of channels C' of the feature set 720 may also increase. In addition, the properties (W', H', C') of the feature set 720 may vary depending on the type and property of the feature extraction network 700. For example, when the feature extraction network 700 is implemented as an artificial neural network (e.g., CNN, DNN, etc.), the properties (W', H', C') of the feature set 720 may vary depending on the position of the layer that outputs each feature (C0, C1, ..., Cn).

The video source 710 and the feature set 720 may have different data distribution characteristics. For example, the video source 710 may generally consist of one channel (grayscale image) or three channels (RGB image). The pixels included in the video source 710 may have the same integer value range across all channels and may have non-negative values. In addition, each pixel value may be evenly distributed within a predetermined integer value range. In contrast, the feature set 720 may consist of various numbers of channels (e.g., 32, 64, 128, 256, 512, etc.) depending on the type (e.g., CNN, DNN, etc.) and layer position of the feature extraction network 700. Feature elements included in the feature set 720 may have different ranges of real values for each channel and may also have negative values. In addition, each feature element value may be densely distributed in a specific region within a predetermined real value range.

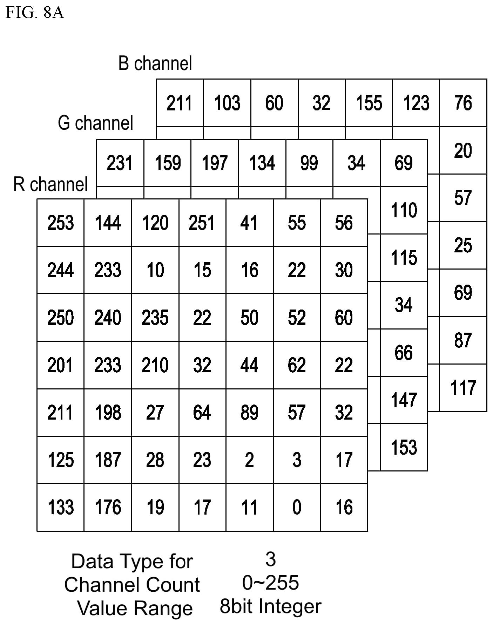

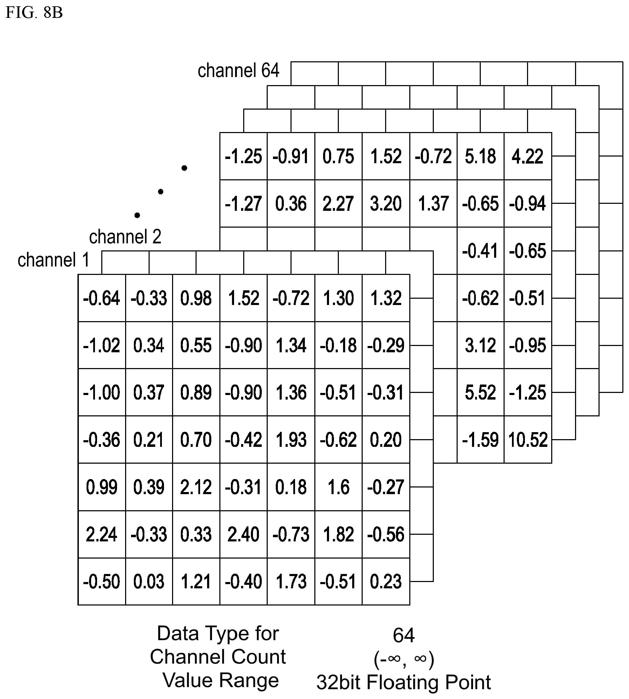

FIG. 8A is a diagram illustrating data distribution characteristics of a video source, and FIG. 8B is a diagram illustrating data distribution characteristics of a feature set.

Referring to FIG. 8A, the video source may consist of a total of three channels-R, G, and B channels (R channel, G channel, B channel)-and each pixel value may have an integer value range from 0 to 255. In this case, the data type of the video source may be represented as an 8-bit integer type.

In contrast, referring to FIG. 8B, the feature set may consist of 64 channels (features), and each feature element value may have a real value range from -∞ to +∞. In this case, the data type of the feature set may be represented as a 32-bit float type.

The feature set may have a feature element value of a float type and may have different data distribution characteristics for each channel (or feature). An example of the data distribution characteristics for each channel of the feature set is shown in Table 1.

**[Table 1]**

| Channel | Average(µ) | Standard derivation(σ) | Max | Min |
|---|---|---|---|---|
| C₀ | 10 | 20 | 90 | 60 |
| C₂ | 30 | 10 | 70.5 | -70.2 |
| ... | | | | |
| Cₙ | 100 | 5 | 115.8 | 80.2 |

Referring to Table 1, the feature set may consist of a total of n+1 channels (C₀, C₁, ..., Cₙ). The mean value (µ), standard deviation (σ), maximum value (Max), and minimum value (Min) of feature elements may differ for each channel (C₀, C₁, ..., Cₙ). For example, the mean value (µ) of the feature elements included in channel 0 (C₀) may be 10, the standard deviation (σ) may be 20, the maximum value (Max) may be 90, and the minimum value (Min) may be 60. In addition, the mean value (µ) of the feature elements included in channel 1 (C₁) may be 30, the standard deviation (σ) may be 10, the maximum value (Max) may be 70.5, and the minimum value (Min) may be -70.2. Furthermore, the mean value (µ) of the feature elements included in channel n (Cₙ) may be 100, the standard deviation (σ) may be 5, the maximum value (Max) may be 115.8, and the minimum value (Min) may be 80.2.

Quantization of a feature/feature map may be performed based on different data distribution characteristics for each channel, as described above. Feature/feature map data of a float type may be converted into an integer type through quantization.

Meanwhile, due to spatiotemporal similarity between consecutive frames, feature sets and/or channels that are consecutively extracted from a video source may have identical/similar data distribution characteristics. An example of data distribution characteristics of consecutive feature sets is shown in Table 2.

**[Table 2]**

| Feture set | Average(µ) | Standard derivation(σ) | Max | Min |
|---|---|---|---|---|
| f_{F0} | 50 | 10 | 110.5 | 10.7 |
| f_{F1} | 52 | 11 | 120.5 | 11.5 |
| f_{F2} | 53 | 10 | 115 | 5 |

In Table 2, f_{F0} denotes a first feature set extracted from frame 0 (F0), f_{F1} denotes a second feature set extracted from frame 1 (F1), and fF2 denotes a third feature set extracted from frame 2 (F2).

Referring to Table 2, the consecutive first to third feature sets (f_{F0}, f_{F1}, f_{F2}) may have identical/similar mean values (µ), standard deviations (σ), maximum values (Max), and minimum values (Min).

In addition, due to spatiotemporal similarity between consecutive frames, corresponding channels within feature sets consecutively extracted from a video source may have identical/similar data distribution characteristics. An example of the data distribution characteristics of corresponding channels of consecutive feature sets is shown in Table 3.

**[Table 3]**

| Feture set | Average(µ) | Standard derivation(σ) | Max | Min |
|---|---|---|---|---|
| f_{F0C0} | 40 | 10 | 110.5 | 10.7 |
| f_{F1C0} | 40 | 11 | 111.5 | 11.5 |

In Table 3, f_{F0C0} denotes the first channel within the first feature set extracted from frame 0 (F0), and f_{F1C0} denotes the first channel within the second feature set extracted from frame 1 (F1).

Referring to Table 3, the first channel (f_{F0C0}) of the first feature set and the second channel (f_{F0C1}) of the second feature set corresponding thereto may have identical/similar mean values (µ), standard deviations (σ), maximum values (Max), and minimum values (Min).

Prediction of a feature/feature map may be performed based on, for example, the similarity of data distribution characteristics among the above-described feature sets or channels.

### Transform/inverse-transform

As described above, an image/video encoder may derive a residual block on the basis of a predicted block and derive quantized transform coefficients by applying transform and quantization to the derived residual block. Similarly, a VCM encoder may derive a residual block on the basis of the predicted block (or feature elements) and derive quantized transform coefficients for features/feature maps by applying transform and quantization to the derived residual block. Information (residual information) on the quantized transform coefficients may be included in residual coding syntax, encoded, and then output in the form of a bitstream.

A decoder (an image/video decoder and a VCM decoder) may acquire the information (the residual information) on the quantized transform coefficients from the bitstream and derive the quantized transform coefficients by decoding the information. Also, the decoder may derive the residual block through an inverse quantization/inverse transform on the basis of the quantized transform coefficients. As described above, at least one of quantization/inverse-quantization and/or transform/inverse-transform may be omitted. When transform/inverse-transform is omitted, the transform coefficients may be referred to as "coefficients" or "residual coefficients" or may still be referred to as "transform coefficients" for consistency of expression. Whether to omit transform/inverse-transform may be signaled on the basis of a certain flag, for example, transform_skip_flag. Meanwhile, in VCM, whether to omit transform/inverse-transform may be determined per feature/feature map or per channel.

Transform/inverse-transform may be performed on the basis of transform kernel(s). For example, according to embodiments, a multiple transform selection (MTS) scheme may be applied. In this case, some of multiple transform kernel sets may be selected and applied to a current block. A transform kernel may be referred to by various terms such as transform matrix, transform type, and the like. For example, a transform kernel set may represent a combination of a vertical-direction transform kernel (vertical transform kernel) and a horizontal-direction transform kernel (horizontal transform kernel).

To indicate a transform kernel set for the current block or a feature/feature map, MTS index information, for example, mts_idx, may be signaled. An example of MTS index information is given in Table 4.

**[Table 4]**

| **mts_idx[ x0 ][ y0 ]** | 0 | 1 | 2 | 3 | 4 |
|---|---|---|---|---|---|
| trTypeHor | 0 | 1 | 2 | 1 | 2 |
| trTypeVer | 0 | 1 | 1 | 2 | 2 |

In Table 4, trTypeHor may represent a horizontal-direction transform kernel, and trTypeVer may represent a vertical-direction transform kernel. A trTypeHor/trTypeVer value of 0 may represent DCT2, a trTypeHor/trTypeVer value of 1 may represent DCT7, and a trTypeHor/trTypeVer value of 2 may represent DCT8. However, these are illustrative, and other values may be mapped to other DCT/DST or transform kernels on the basis of predefined rules.

In the present disclosure, MTS-based transform/inverse-transform may be applied as primary transform/inverse-transform, and secondary transform/inverse-transform may be further applied. In this case, a transform on an encoder side may be performed in order of primary transform and secondary transform, and a transform on a decoder side may be performed in order of secondary inverse-transform and primary inverse-transform. According to embodiment, a secondary transform may only be applied to coefficients of a top-left low-frequency region of a coefficient block to which a primary transform is applied. This secondary transform may be referred to as "low frequency non-separable transform (LFNST)." Also, according to an embodiment, the number of coefficients may be reduced as a result of performing the secondary transform. This secondary transform may be referred to as "reduced secondary transform (RST)."

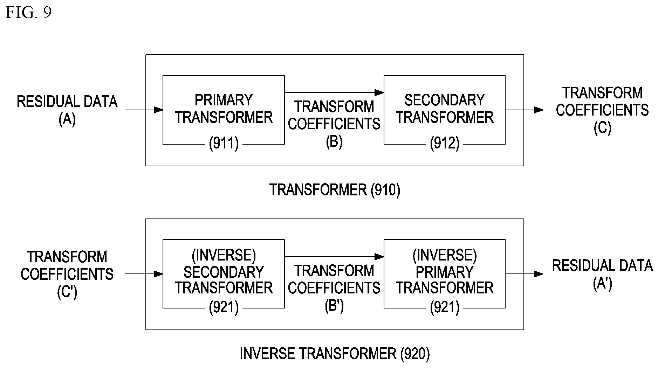

FIG. 9 is a diagram illustrating transform and inverse transform processes to which embodiments of the present disclosure are applicable. In FIG. 9, a transformer 910 may correspond to the transformer 332 of FIG. 3, and an inverse transformer 920 may correspond to the inverse transformer 335 of FIG. 3 or the inverse transformer 422 of FIG. 4.

Referring to FIG. 9, the transformer 910 may include a primary transformer 911 and a secondary transformer 912.

The primary transformer 911 may generate (primary) transform coefficients B by applying a primary transform to residual data A (or residual feature elements). In the present disclosure, the primary transform may be referred to as "core transform." The primary transform may be performed on the basis of an MTS scheme. When an existing MTS is applied, a transform from the spatial domain to the frequency domain is applied to a residual signal (or a residual block) on the basis of DCT type 2, DCT type 7, DCT type 8, etc., such that transform coefficients (or primary transform coefficients) may be generated. Here, DCT type 2, DCT type 7, DCT type 8, etc., may be referred to as "transform type," "transform kernel," or "transform core." However, these are illustrative, and the primary transform may also be applied to MTS kernels other than the foregoing MTS kernels.

The secondary transformer 912 may generate (secondary) transform coefficients C by applying a secondary transform to the (primary) transform coefficients B. The secondary transform is a non-separable transform, for example, the foregoing LFNST or RST. For example, when a 4×4 block is used, the non-separable secondary transform may be performed as follows.

A 4×4 input block X may be represented as in Equation 1 below.$X = \left[\begin{matrix}{X}_{00} & {X}_{01} & {X}_{02} & {X}_{03} \\ {X}_{10} & {X}_{11} & {X}_{12} & {X}_{13} \\ {X}_{20} & {X}_{21} & {X}_{22} & {X}_{23} \\ {X}_{30} & {X}_{31} & {X}_{32} & {X}_{33}\end{matrix}\right]$

When the input block X is expressed in a vector form, the vector X may be represented as in Equation 2 below.$\vec{X} = {\left[{X}_{00}, {X}_{01}, {X}_{02}, {X}_{03}, {X}_{10}, {X}_{11}, {X}_{12}, {X}_{13}, {X}_{20}, {X}_{21}, {X}_{22}, {X}_{23}, {X}_{30}, {X}_{31}, {X}_{32}, {X}_{33}\right]}^{T}$

In this case, the non-separable secondary transform may be calculated using Equation 3 below.$\vec{F} = T ⋅ \vec{X}$

Here, the vector F is a transform coefficient vector, T is a 16×16 non-separable transform matrix, and · is multiplication of a matrix and a vector.

From the above equation, the 16×1 transform coefficient vector F may be derived, and the vector F may be reconfigured as a 4×4 block in a scan order (e.g., a horizontal, vertical, diagonal, or predetermined/prestored scan order).

Subsequently, an inverse transformer 820 may include a (inverse) secondary transformer 821 and a (inverse) primary transformer 822.

The (inverse) secondary transformer 921 may generate (primary) (inverse) transform coefficients B' by applying a (inverse) secondary transform to dequantized (secondary) transform coefficients C'. Here, the (inverse) secondary transform may correspond to an inverse process of the secondary transform performed by the transformer 910. The (inverse) secondary transform may be applied to the top-left corner of a coefficient block according to embodiment.

The (inverse) primary transformer 922 may generate residual samples A' by applying a (inverse) primary transform to the (primary) (inverse) transform coefficients B'.

### Quantization/dequantization

As described above, the quantizer 333 of the encoder 300 may derive quantized transform coefficients by applying quantization to transform coefficients, and the dequantizer 334 of the image/video encoder 300 or the dequantizer 421 of the image/video encoder 400 may derive transform coefficients by applying dequantization to quantized transform coefficients. Similarly, a VCM encoder may derive quantized transform coefficients by applying quantization to transform coefficients, and a dequantizer of a VCM encoder or a dequantizer of a VCM decoder may derive transform coefficients by applying dequantization to quantized transform coefficients. In general, a quantization rate may be changed in feature/feature map coding, and the changed quantization rate may be used for adjusting a compression rate. From an implementation perspective, complexity may be taken into consideration to use a quantization parameter (QP) instead of directly using the quantization rate. For example, QPs having integer values of 0 to 63 may be used, and each QP value may correspond to an actual quantization rate. QPs QPY for luma components (luma samples) and QPs QPC for chroma components (chroma samples) may be set differently.

During a quantization process, a transform coefficient C may be input and divided by a quantization rate Qstep, and a quantized transform coefficient C' may be obtained on the basis of the result. In this case, considering computational complexity, the quantization rate may be multiplied by a scale and thereby converted into an integer, and a shift operation of a value corresponding to a scale value may be performed. A quantization scale may be derived from the product of the quantization rate and the scale value. In other words, the quantization scale may be derived in accordance with a QP. The transform coefficient C and the quantization scale may be applied, and the quantized transform coefficient C' may be derived on the basis of the result.

During a dequantization process that is an inverse process of the quantization process, the quantized transform coefficient C' may be multiplied by the quantization rate Qstep, and a restored transform coefficient C" may be obtained on the basis of the result. In this case, a level scale may be derived from the QP, and the level scale may be applied to the quantized transform coefficient C'. Based on the result, a restored transform coefficient C" may be derived. The restored transform coefficient C" may slightly differ from the initial transform coefficient due to loss in the transform and/or quantization process. Therefore, an encoder performs dequantization in the same manner as a decoder.

Meanwhile, an adaptive frequency weighting quantization technique for adjusting quantization strength in accordance with frequency may be applied. The adaptive frequency weighting quantization technique is a method of applying different quantization strengths to frequencies. According to the adaptive frequency weighting quantization technique, a predefined quantization scaling matrix may be used for applying different frequency-specific quantization strengths. In other words, the foregoing quantization/dequantization process may be performed on the additional basis of the quantization scaling matrix. For example, depending on a size of a current block and/or whether a prediction mode applied to the current block to generate a residual signal of the current block is inter prediction or intra prediction, different quantization scaling matrices may be used. A quantization scaling matrix may be referred to as "quantization matrix" or "scaling matrix." The quantization scaling matrix may be defined in advance. Also, for frequency-adaptive scaling, frequency-specific quantization scale information of the quantization scaling matrix may be configured/encoded by an encoder and signaled to a decoder. Frequency-specific quantization scale information may be referred to as "quantization scaling information." The frequency-specific quantization scale information may include scaling list data scaling_list_data. Based on the scaling list data, a (modified) quantization scaling matrix may be derived. Also, the frequency-specific quantization scale information may include present flag information indicating whether scaling list data exists. On the other hand, when the scaling list data is signaled at an upper level (e.g., a sequence level, a feature-set group level, etc.), information indicating whether the scaling list data is modifiable at a lower level (e.g., a feature set level, a channel level, etc.), etc., may be further included.

Feature quantization/dequantization may be performed on the basis of a certain quantization group. Specifically, a plurality of quantization sections may be set on the basis of data distribution characteristics of a feature set. The set quantization sections may have different data distribution ranges and may be defined as one quantization group. Also, a feature quantization/dequantization computation may be performed by converting data distribution of each channel in a feature set into any one data distribution range.

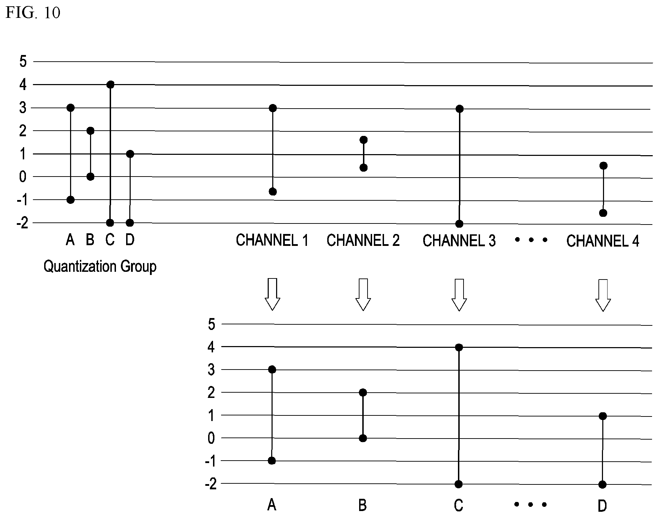

FIG. 10 is a diagram illustrating a quantization group according to an embodiment of the present disclosure.

Referring to FIG. 10, a quantization group may include 4 quantization sections A, B, C, and D having different data distribution ranges. Each of the quantization sections A, B, C, and D in the quantization group may be defined using minimum and maximum values and set on the basis of data distribution characteristics of a current feature/feature map. For example, the quantization sections A, B, C, and D may be set as [-1, 3], [0, 2], [-2, 4], and [-2, 1], respectively.

A VCM encoder may quantize each channel (or feature) in a feature set on the basis of the preset quantization sections A, B, C, and D without additionally calculating maximum and minimum values of feature elements. For example, a first channel (channel 1) may be quantized on the basis of the quantization section A with the most similar data distribution range. A second channel (channel 2) may be quantized on the basis of the quantization section B with the most similar data distribution range. A third channel (channel 3) may be quantized on the basis of the quantization section C with the most similar data distribution range. A fourth channel (channel 4) may be quantized on the basis of the quantization section D with the most similar data distribution range. In this case, the VCM encoder may encode/signal the number, minimum value, and maximum value of quantization sections as feature quantization-related information. Also, the VCM encoder may signal quantization section index information that represents a quantization section used for encoding a current channel (or feature), as feature quantization-related information. Accordingly, it is unnecessary to signal the number of quantization bits per channel and maximum and minimum values of feature elements, reducing the number of transmission bits and improving coding/signaling efficiency.

A VCM decoder may generate the same quantization group as that generated by the VCM encoder on the basis of the number of quantization sections and minimum and maximum values of each section received from the VCM encoder. Alternatively, the VCM decoder may generate a quantization group on the basis of data distribution characteristics of previously reconstructed feature sets. The VCM decoder may dequantize a current feature on the basis of a quantization section identified from the quantization section index information received from the VCM encoder.

An example of a feature quantization operation based on a quantization group is as in Equations 4 and 5.${F}_{norm} = \frac{{F}_{n} - min \left({F}_{n}\right)}{max \left({F}_{n}\right) - min \left({F}_{n}\right)}$${F}_{{n}^{G}} = {F}_{{n}^{norm}} \left(max\left({F}_{{G}_{m}}\right)-min\left({F}_{{G}_{m}}\right)\right) + min \left({F}_{{G}_{m}}\right)$

In Equation 4, Fₙ may be an n^{th} channel (n is an integer greater than or equal to 1) of a feature set Fset^{RxC}. Here, R may be a width of the feature set, and C may be a height of the feature set. Also, max(Fₙ) may be a maximum value of feature elements in the n^{th} channel, and min(Fₙ) may be a minimum value of the feature elements in the n^{th} channel.

Referring to Equation 4, the n^{th} channel Fₙ may be normalized on the basis maximum and minimum values of feature elements in a channel to have feature element values between 0 and 1.

In Equation 5, Fn^{norm} may be a normalized n^{th} channel of the feature set Fset^{RxC}. Here, R may be a width of the feature set, and C may be a height of the feature set. Also, max(F_{Gm}) may be a maximum value of a quantization section F_{Gm} applied to the n^{th} channel Fₙ, and min(F_{Gm}) may be a minimum value of the quantization section F_{Gm} applied to the n^{th} channel Fₙ.

Referring to Equation 5, the normalized n^{th} channel Fn^{norm} may be quantized on the basis of the maximum value max(F_{Gm}) and the minimum value min(F_{Gm}) of the quantization section F_{Gm} applied to the n^{th} channel Fₙ.

Meanwhile, for dequantization, quantization-related information may be encoded in a bitstream. According to embodiment, the quantization-related information may include global quantization information, activation function information, the number of quantization bits, and quantization section index information. The global quantization information may indicate whether the number of quantization bits will be set separately for each quantization section or set identically for all quantization sections. The activation function information may indicate a type of activation function applied to a current feature. For example, the activation function information may indicate whether the activation function applied to the current feature is a first activation function involving signaling both maximum and minimum values of each quantization section or a second activation function involving only signaling a maximum value of each quantization section. The number of quantization bits may be set separately for each quantization section on the basis of the foregoing global quantization information or set identically for all the quantization sections. When the number of quantization bits is set identically for all the quantization sections, the number of quantization bits may be signaled only once for all the quantization sections.

In addition, the quantization-related information may further include the number of quantization sections in a quantization group and minimum and maximum values of each quantization section. Here, minimum and maximum values of each quantization section may be adaptively signaled on the basis of the type of activation function. For example, when the activation function applied to the current feature is the first activation function (e.g., leaky rectified linear unit (ReLU)), both minimum and maximum values of each quantization section may be signaled. On the other hand, when the activation function applied to the current feature is the second activation function (e.g., ReLU), a minimum value of each quantization section may be estimated to be 0, and only a maximum value of each quantization section may be signaled.

### Entropy coding

As described above, some or all feature/feature map information may be encoded by the entropy encoder 340, and some or all feature/feature map information may be decoded by the entropy decoder 410. In this case, the feature/feature map information may be encoded/decoded per syntax element like image/video information. In the present disclosure, "information is encoded/decoded" may include "information is encoded/decoded in a way described in this paragraph."

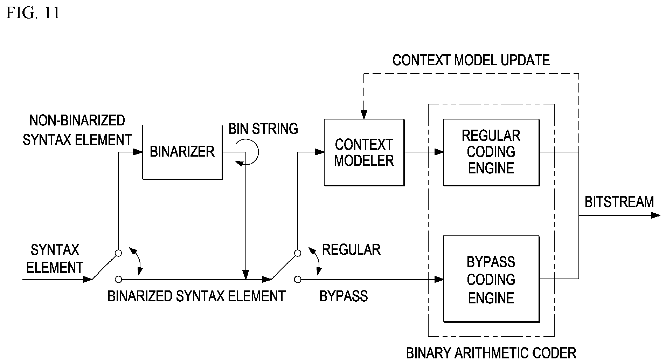

FIG. 11 is a block diagram illustrating context-adaptive binary arithmetic coding (CABAC) for encoding one syntax element.

Referring to FIG. 11, when an input signal is a syntax element rather than a binary value, a CABAC encoding process first involves converting the input signal into a binary value through binarization. When the input signal is already a binary value, the input signal may bypass binarization. Here, each binary number of 0 or 1 constituting a binary value may be referred to as "bin." For example, when a binary string (bin string) is 110 after binarization, each of 1, 1, and 0 may be a single bin. Bin(s) of one syntax element may represent a value of the syntax element.

The binarized bins may be input to a regular coding engine or a bypass coding engine. The regular coding engine may assign a context model for reflecting a probability value to a corresponding bin and may encode the corresponding bin on the basis of the assigned context model. The regular coding engine may encode each bin and then update a probability model for the bin. These coded bins may be referred to as "context-coded bins." The bypass coding engine may omit a procedure for estimating probabilities of the input bins and a procedure for updating probability models applied to the bins after coding. It is possible to increase a coding rate by coding the input bins using a uniform probability distribution (e.g., 50:50) instead of assigning context. These coded bins may be referred to as "bypass bins." A context model may be assigned and updated for each context-coded (regular-coded) bin, and context models may be indicated on the basis of ctxidx or ctxInc. ctxidx may be derived from ctxInc. As a specific example, a context index ctxidx indicating a context model for each of regular-coded bins may be derived as the sum of a context index increment ctxInc and a context index offset ctxIdxOffset. Here, ctxInc may be derived differently depending on each bin. ctxIdxOffset may be the lowest value of ctxIdx. ctxIdxOffset may generally be determined depending on a type of slice, and a context model for a single syntax element in a slice may be determined/derived from ctxInc.

It may be determined whether to perform encoding through the regular coding engine or the bypass coding engine during the entropy encoding procedure, and coding paths may be switched. As entropy decoding, the same process as entropy encoding may be performed in reverse order.

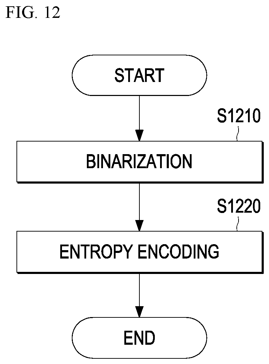

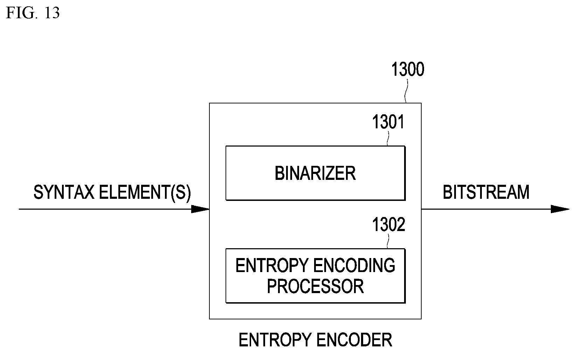

The foregoing entropy coding may be performed, for example, as shown in FIGS. 12 and 13.

FIGS. 12 and 13 are diagrams illustrating an entropy encoding procedure.

Referring to FIGS. 12 and 13 together, an encoder (entropy encoder) may perform an entropy coding procedure for feature/feature map information. The feature/feature map information may include prediction-related information (e.g., inter/intra prediction determination information, intra prediction mode information, inter prediction mode information, etc.), residual information, in-loop filtering-related information, etc., or may include various syntax elements related thereto. This entropy coding may be performed per syntax element. The entropy encoder may be the entropy encoder 340 of the image/video encoder 300 of FIG. 3 described above.

The encoder may binarize a target syntax element (S1310). Here, the binarization may be based on various binarization methods such as a truncated rice binarization process, a fixed-length binarization process, etc., and a binarization method for the target syntax element may be defined in advance. The binarization procedure may be performed by a binarizer 1301 in an entropy encoder 1300.

The encoder may perform entropy encoding on the target syntax element (S1220). The encoder may perform regular coding-based (context-based) encoding or bypass coding-based encoding on a bin string of the target syntax element on the basis of CABAC, context-adaptive variable length coding (CAVLC), etc., and the output may be included in a bitstream. The entropy coding procedure may be performed by an entropy encoding processor 1402 in the entropy encoder 1300. The output bitstream may be transmitted to a decoder via a (digital) storage medium or a network as described above.

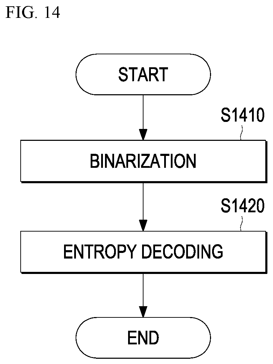

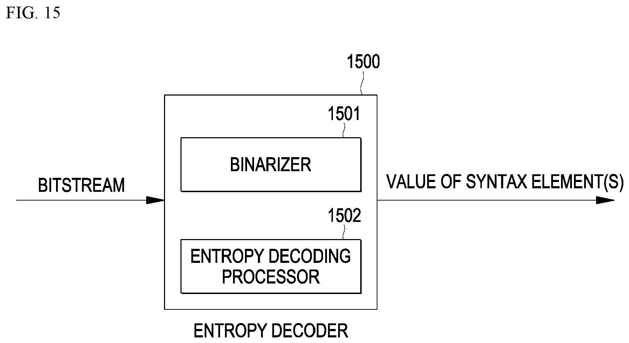

FIGS. 14 and 15 are diagrams illustrating an entropy decoding procedure.

Referring to FIGS. 14 and 15, a decoder (entropy decoder) may decode encoded feature/feature map information. The feature/feature map information may include prediction-related information (e.g., inter/intra prediction determination information, intra prediction mode information, inter prediction mode information, etc.), residual information, in-loop filtering-related information, etc., or may include various syntax elements related thereto. Entropy coding may be performed per syntax element. The entropy decoder may be the entropy decoder 410 of the image/video decoder 400 of FIG. 4 described above.

The decoder may binarize a target syntax element (S1410). Here, the binarization may be based on various binarization methods such as a truncated rice binarization process, a fixed-length binarization process, etc., and a binarization method for the target syntax element may be defined in advance. The decoder may derive available bin strings (bin string candidates) for available values of the target syntax element through the binarization procedure. The binarization procedure may be performed by a binarizer 1501 in an entropy decoder 1500.

The decoder may perform entropy decoding on the target syntax element (S1420). The decoder may sequentially decode and parse bins of the target syntax element from input bit(s) in a bitstream, comparing a derived bin string with available bin strings for the syntax element. When the derived bin string is identical to one of the available bin strings, a value corresponding to the bin string may be derived as a value of the syntax element. Otherwise, the next bit in the bitstream may be further parsed, and then the foregoing procedure may be performed again. This process makes it possible to signal specific information (a specific syntax element) in the bitstream using variable-length bits rather than a start bit and a stop bit of the specific information. In this way, a relatively small number of bits can be allocated to a low value, and overall coding efficiency can be improved.

The decoder may perform context-based decoding or bypass coding-based decoding on bins in the bin string from the bitstream on the basis of an entropy coding technique such as CABAC, CAVLC, or the like. The entropy decoding procedure may be performed by an entropy decoding processor 1502 in the entropy decoder 1500. As described above, the bitstream may include various information for feature/feature map decoding. The bitstream may be transmitted to a decoding apparatus via a (digital) storage medium or a network as described above.

In the present disclosure, a table (syntax table) including syntax elements may be used for indicating information signaling from an encoder to a decoder. The order of syntax elements of the table including syntax elements used in the present disclosure may represent a parsing order of syntax elements from a bitstream. An encoder may generate and encode the syntax table such that syntax elements may be parsed in the parsing order by a decoder, and a decoder may acquire values of the syntax elements by parsing and decoding the syntax elements of the syntax table in the parsing order from the bitstream.

### Coding layers and architecture

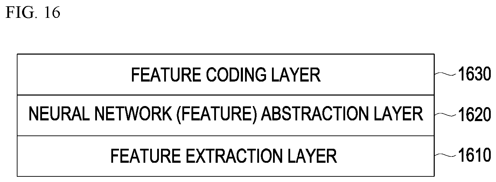

FIG. 16 is a diagram showing an example of a VCM layer architecture.

Referring to FIG. 16, a VCM layer architecture may be composed of a feature extraction layer 1610, a neural network (feature) abstraction layer 1620, and a feature coding layer 1630.

The feature extraction layer 1610 is a layer for extracting features from an input source, and may also include extraction results.

The feature coding layer 1630 is a layer for compressing the extracted features, and may also include compression results.

The neural network (feature) abstraction layer 1620 may abstract information (e.g., information on the extracted features/a feature map) generated by the feature extraction layer 1610 and transmit the abstracted information to the feature coding layer 1630. By abstracting the information, the neural network abstraction layer (NNAL) 1720 may conceal the inside of the feature extraction layer 1610 and provide a consistent feature interface function. Accordingly, even when a compression target changes due to a tool (e.g., CNN, DNN, etc.) change, etc., the feature coding layer 1630 may perform a consistent feature coding procedure. In the present disclosure, an NNAL may also be referred to as "feature abstraction layer."

An interface between the feature extraction layer 1610 and the NNAL 1620 and an interface between the feature coding layer 1630 and the NNAL 1620 may be defined in advance, and operations of the NNAL 1620 may be set to be changeable later.

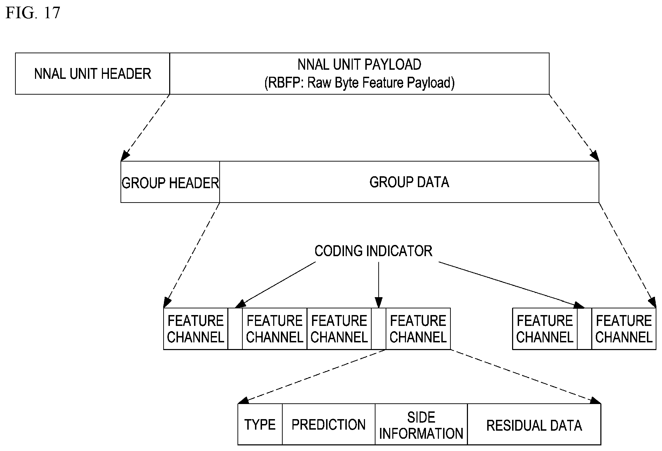

FIG. 17 is a diagram showing an example of a bitstream composed of encoded abstracted features and NNAL information.

A bitstream configured as shown in FIG. 17 may be referred to as "NNAL unit." An NNAL unit may be a single independent feature reconstruction unit. Input features for a single NNAL unit may be extracted from the same layer in a neural network. Accordingly, input features for a single NNAL unit may be forced to have the same characteristic. For example, the same feature extraction method may be applied to input features for a single NNAL unit.

An NNAL unit may include an NNAL unit header and an NNAL unit payload. The NNAL unit header may include all information required for utilizing an encoded feature in accordance with a task. The NNAL unit payload may include abstracted feature information. The NNAL unit payload may include a group header and group data. The group header may include constitution information about feature group data such as information on the temporal order, number, and common attributes of feature channels constituting the feature group. The feature channels may be encoded feature units. The group data may include the plurality of feature channels and coding indicators, and each of the feature channels may include type information, prediction information, side information, and residual information (data). In this case, the type information may indicate an encoding method, and the prediction information may indicate a prediction method. Also, the side information may indicate additional information (e.g., entropy coding, quantization-related information, etc.) required for decoding, and the residual information may include information on encoded feature elements (i.e., a set of feature value information).

In the present disclosure, an encoding method applied in accordance with a purpose of a user or machine and a method of expressing a suitable use and attributes of an encoded bitstream will be described.

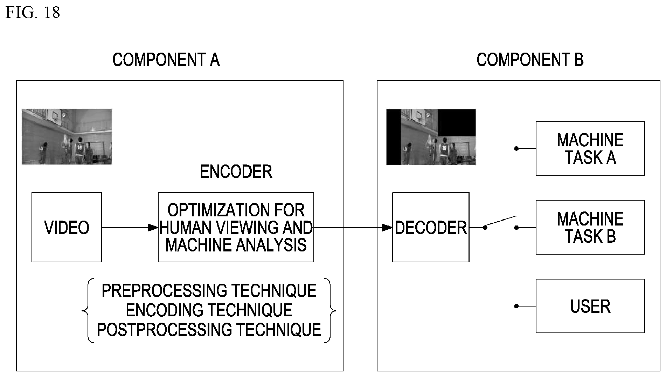

FIG. 18 is a diagram illustrating encoding optimization and the use of an encoded bitstream in accordance with a purpose to which an embodiment of the present disclosure is applicable.

Referring to FIG. 18, component A may represent an example of a side that provides a video. The video may include any bitstream that is encoded in real time or has already been encoded. An encoder of component A may include a function of optimizing input data for the purpose of use. Here, the optimization may be achieved through preprocessing, an encoding process, postprocessing, and the like.

When the purpose of using the video is machine analysis, it may be intended to achieve required performance of a machine task using a small number of bits and resources. In this case, an optimization method may vary depending on attributes of the machine task to be performed.

When the purpose of using the video is human viewing, it may be intended to transmit information to be delivered to a user through the video using a small number of bits and resources. In this case, an optimization method may vary depending on the user's attributes, that is, the user's visual system.

When a target that will receive the video changes or the purpose of receiving the video changes, an optimization method may also change. When it is possible to identify whether a bitstream currently received by the user or machine is optimized, an optimization range, and an optimization method, whether the received bitstream is suitable may be determined to request an optimization method aligned with the purpose.

A method of expressing a purpose, an attribute, and an application range of optimization will be described below. When this method is used, a user or machine can determine the suitability of an optimization method, and in this way, it is possible to efficiently request and use an optimization method aligned with the purpose, thus improving system efficiency.

An expression method defined in the present embodiment may be included in information required for transmitting an encoded video stream and an encoded video. For example, this information may be transmitted via a supplemental enhancement information (SEI) message.

Tables 5 to 7 below show examples of syntax structures specifying optimization information encoded by an encoder. First, syntax elements that may be signaled in accordance with whether a bitstream is optimized will be described with reference to Table 5.

**[Table 5]**

| | |
|---|---|
| encoder_optimization_info(payloadSize ) { | **Descriptor** |
| **optimization_cancel_flag** | u(1) |
| if(!optimization_cancel_ITag) ] | |
| **optimization_persistence_flag** | u(1) |
| **optimization_for _human_viewing_flag** | u(1) |
| **optimization_for_machine_analysis_flag** | u(1) |
| **optimization_type** | u(16) |
| } | |
| } | |

Referring to Table 5, encoded optimization information encoder_optimization_info may include an optimization persistence cancelation flag optimization_cancel_flag, an optimization persistence flag optimization_persistence_flag, an optimization flag for a human viewing optimization_for_human_viewing_flag, an optimization flag for a machine analysis optimization_for_machine_analysis_flag, and optimization attribute information optimization_type which are syntax elements.

The syntax element optimization_cancel_flag may indicate whether the persistence of optimization being applied is canceled. When the optimization persistence cancelation flag has a value of 1, this may represent that the persistence of previously applied optimization is canceled. When the value is 0, this may represent that optimization_persistence_flag, optimization_for_human_viewing_flag, optimization_for_machine_analysis_flag, and optimization_type are defined thereafter. The value of 0 may represent that optimization and an application range identified from optimization_persistence_flag, optimization_for_human_viewing_flag, optimization_for_machine_analysis_flag, and optimization_type defined thereafter are applicable.

The syntax element optimization_persistence_flag may represent the persistence of optimization indicated by optimization_type. When the value is 0, this may represent that optimization identified from optimization_type is only applicable to the current picture. When the value is 1, this may represent that optimization identified from optimization_type is also applicable to a current picture and all follow-up pictures.

The syntax element optimization_for_machine_analysis_flag may indicate whether the optimization purpose is machine analysis. The value of 1 may represent that the optimization and the encoded bitstream are intended to perform machine analysis (suitable for machine task). The value of 0 represents that the optimization and the encoded bitstream may or may not be intended for machine analysis.

The syntax element optimization_for_human_viewing_flag may indicate whether the optimization purpose is human viewing. The value of 1 may represent that the optimization and the encoded bitstream are intended for human viewing (suitable for human viewing). The value of 0 represents that the optimization and the encoded bitstream may or may not be intended for human viewing.

In various embodiments, the optimization may unintentionally affect encoding quality. For example, the optimization may be performed for machine analysis, but a quality improvement for human viewing may be observed. In this case, optimization_for_machine_analysis_flag may be set to 1, and optimization_for_human_viewing_flag may be set to 0. In this way, it is possible to clearly define what the intended purpose of optimization is. As another example, the optimization may be performed for human viewing, but a quality improvement for machine analysis may be observed. In this case, optimization_for_human_viewing_flag may be set to 0, and optimization_for_machine_analysis_flag may be set to 1. In other words, neither optimization_for_human_viewing_flag nor optimization_for_machine_analysis_flag may be set to 1.

Values of optimization_for_human_viewing_flag and optimization_for_machine_analysis_flag may be defined under the following limitations. For example, when the optimization purpose is limited to human viewing and machine analysis, the values may not be 0 simultaneously. In other words, the values of optimization_for_human_viewing_flag and optimization_for_machine_analysis_flag may not be 0 simultaneously. In this case, when the preceding one of optimization_for_human_viewing_flag and optimization_for_machine_analysis_flag has a value of 0, the following one has a value of 1, and thus it is unnecessary to encode the value in the bitstream. A decoder or a receiving side may process the value as 1. Tables 6 and 7 below may show examples thereof.

**[Table 6]**

| | |
|---|---|
| encoder_optimization_info(payloadSize ) } | **Descriptor** |
| **optimization_cancel_flag** | u(1) |
| if(!optimization_cancel_flag) { | |
| **optimization_persistence_flag** | u(1) |
| **optimization_for_human_wiewing_flag** | u(1) |
| **if(optimization_ for_human_viewing_flag){** | |
| **optimization_for_machine_analysis_flag** | u(1) |
| } | |
| **optimization_type** | u(16) |
| } | |
| } | |

**[Table 7]**

| | |
|---|---|
| encoder_optimization_info(payloadSize ) { | **Descriptor** |
| **optimization_cancel_flag** | u(1) |
| if(!optimization_cancel_flag) { | |
| **optimization_persistence_flag** | u(1) |
| **optimization_for_human_viewing_flag** | u(1) |
| **if(optimization_for_human_viewing_flag) {** | |
| **optimization_for_machine_analysis_flag** | u(1) |
| } | |
| **optimization_type** | u(16) |
| } | |
| } | |

According to Table 6 above, when optimization_for_human_viewing_flag has a value of 1, optimization_for_machine_analysis_flag may be defined, and when optimization_for_human_viewing_flag has a value of 0, optimization_for_machine_analysis_flag may be processed as a value of 1. In other words, the encoder side does not need to encode the optimization_for_machine_analysis_flag value in the bitstream, and the decoder side can infer the value as 1 without parsing it.

As another example, according to Table 7 above, when optimization_for_machine_analysis_flag has a value of 1, optimization_for_human_viewing _flag may be defined, and when optimization_for_machine_analysis_flag has a value of 0, optimization_for_human_viewing_flag may be processed as a value of 1. In other words, the encoder side does not need to encode the optimization_for_human_viewing_flag value in the bitstream, and the decoder side can infer the value as 1 without parsing it.

The syntax element optimization_type may represent an attribute (or type) of an optimization method. Optimization attributes identified from optimization_type may be represented as in Table 8 below.

**[Table 8]**

| Value | Interpretation |
|---|---|
| optimization_type = = 0 | May be used as determined by the application |
| optimization_type > 0 && ( optimization_type & 0x01) = = 0 | No object-based optimization |
| ( optimization_type & 0x01 ) != 0 | With object-based optimization |
| optimization_type > 0 && ( optimization_type & 0x02 ) = = 0 | No temporal resampling optimization |
| ( optimization_type & 0x02 ) != 0 | With temporal resampling optimization |
| optimization_type > 0 && ( optimization_type & 0x04 ) = = 0 | No spatial resampling optimization |
| ( optimization_type & 0x04 ) != 0 | With spatial resampling optimization |
| optimization_type > 0 && ( optimization_type & 0x08 ) = = 0 | No temporal quality optimization |
| ( optimization_type & 0x08 ) != 0 | With temporal quality optimization |
| optimization_type > 0 && ( optimization_type & 0x10) = = 0 | No spatial quality optimization |
| ( optimization_type & 0x10) != 0 | With spatial quality optimization; the pictures for which this SEI message persists have been pre-processed or encoded to reduce unnecessary information or improve the quality of necessary information.(e.g to reduce the amount of noise and remove speckles at the picture-level) |
| ( optimization_type & 0x20 ) == 0 | No optimization for color vision deficiency |
| ( optimization_type & 0x20 ) != 0 | With color vision deficiency optimization; the pictures for which this SEI message persists have been pre-processed or encoded to reduce unnessary information for individuals with color blindness or to enhance their ability to distinguish colors.(e.g. Transforming indistinguishable colors into distinguishable ones or removing unperceivable color information) |

According to Table 8, an attribute of the optimization method may be defined depending on an optimization_type value. Optimization attributes defined in Table 8 are illustrative, and a corresponding structure may be used to define new optimization attributes. Optimization attributes and methods may be identified to include only some of the optimization attributes defined in Table 8 rather than all the optimization attributes, or may include optimization attributes and methods not defined in Table 8.

According to Table 8, the information on the optimization type may include information indicating whether object-based optimization is applied, whether temporal resampling is applied, whether spatial resampling is applied, whether temporal quality optimization is applied, whether spatial quality optimization is applied, or whether optimization for color vision deficiency is applied.

Table 9 below may show an example of optimization methods that may perform the same functions as those shown in Table 8 but are expressed in a different way. In other words, Table 9 is another example of expressing a plurality of optimization methods using a bitmask for optimization_type.

**[Table 9]**

| bitMask | Interpretation |
|---|---|
| 0x01 | Object-based optimization; the pictures for which this SEI message persists have been pre-processed or encoded so that detected objects in the pictures are optimized with respect to other parts of the pictures for the indicated optimization purposes |
| 0x02 | Temporal resampling optimization |
| 0x04 | Spatial resampling optimization |
| 0x08 | Temporal quality optimization |
| 0x10 | Spatial quality optimization; the pictures for which this SEI message persists have been pre-processed or encoded to reduce unnecessary information or improve the quality of necessary information.(e.g to reduce the amount of noise and remove speckles at the picture-level) |
| 0x20 | Color vision deficiency optimization; the pictures for which this SEI message persists have been pre-processed or encoded to reduce unnessary information for individuals with color blindness or to enhance their ability to distinguish colors.(e.g. Transforming indistinguishable colors into distinguishable ones or removing unperceivable color information) |

According to Table 9, since color vision deficiency optimization is for human viewing, a corresponding value may be defined only when optimization_for_human_viewing_flag has a value of 1.

According to Tables 8 and 9, the information indicating whether object-based optimization is applied may be extracted by a logical AND operation between the information on the optimization type and a bitmask 0x01. The information indicating whether temporal resampling is applied may be obtained by a logical AND operation between the information on the optimization type and a bitmask 0x02. The information indicating whether spatial resampling is applied may be obtained by a logical AND operation between the information on the optimization type and a bitmask 0x04. The information indicating whether temporal quality optimization is applied may be obtained by a logical AND operation between the information on the optimization type and a bitmask 0x08. The information indicating whether spatial quality optimization is applied may be obtained by a logical AND operation between the information on the optimization type and a bitmask 0x10. The information indicating whether optimization for color vision deficiency is applied may be obtained by a logical AND operation between the information on the optimization type and a bitmask 0x20.

As another example, Table 10 below shows an embodiment of syntax for additionally expressing necessary additional information depending on optimization attributes.

**[Table 10]**

| | |
|---|---|
| encoder_optimization_info(payloadSize ) { | **Descriptor** |
| **optimization_cancel_flag** | u(1) |
| if( !optimization_cancel_flag }\| | |
| **optimization_persistence_flag** | u(1) |
| **optimization _for_human_viewing_flag** | u(1) |
| **optimization_for_machine_analysis_flag** | u(1) |
| **optimization_type** | u(16) |
| if(optimizationForCVDFlag) | |
| { | |
| **CVD_type_idc** | u(3) |
| **CVD_optimization_method_idc** | |
| } | |
| } | |
| } | |

According to Table 10, the encoder optimization information (encoder_optimization_info) may further include syntax elements such as a color vision deficiency type index (CVD_type_idc) or a color vision deficiency optimization method index (CVD_optimization_method_idc).

The variable optimizationForCVDFlag may indicate whether the optimization_type includes optimization for color vision deficiency. When it is included, the value may be set to 1 and may be derived as shown in Equation 6.$optimizationForCVDFlag = \left(\left(optimization_type&0\times 20\right)>0\right) ? 1 : 0$

That is, the variable optimizationForCVDFlag may be derived according to the values defined in Table 9.

The syntax element CVD_type_idc may represent identification information for identifying a type of color vision deficiency. Table 11 below shows an example of types of color vision deficiency.

**[Table 11]**

| CVD_type_idc | CVD(color vision deficiency) Type |
|---|---|
| 001 | Protanomaly, Red-deficiency |
| 010 | Protanopy, Red-deficiency |
| 011 | Deuteranomaly, Green-deficiency |
| 100 | Deuteranopy, Green-deficiency |
| 101 | Tritanomaly, Blue-deficiency |
| 110 | Tritanopy, Blue-deficiency |
| 111 | Complete color blindness |

The syntax element CVD_optimization_method_idc may represent identification information indicating a type of optimization method for color vision deficiency. Table 12 below may show an example of types of optimization methods for color vision deficiency.

**[Table 12]**

| CVD_optimization_method_idc | Description |
|---|---|
| 0 | Reducing the colors of the video to fit into the perceptible color space of the user. |
| 1 | Transforming the colors of the video to make them distinguishable for the user |

Table 13 below may show an example of optimization methods that may perform the same functions as those shown in Table 12 but are expressed in a different way. In other words, Table 13 is another example of expressing types of optimization methods using a bitmask for optimization_type.

**[Table 13]**

| bitMask | Interpretation |
|---|---|
| 0x01 | Reducing the colors of the video to fit into the perceptible color space of the user. |
| 0x02 | Transforming the colors of the video to make them distinguishable for the user |

Optimization for color vision deficiency may be included in spatial quality. In this case, unlike in Tables 8 and 9, optimization_type for color vision deficiency optimization may not be defined. Table 14 below may show an example of expressing optimization attributes and purposes without defining information on a optimization type.

**[Table 14]**

| Value | Interpretation |
|---|---|
| optimization_type = = 0 | May be used as determined by the application |
| optimization_type > 0 && ( optimization_type & 0x01 ) = = 0 | No object-based optimization |
| ( optimization_type & 0x01 ) != 0 | With object-based optimization |
| optimization_type > 0 && ( optimization_type & 0x02 ) = = 0 | No temporal resampling optimization |
| ( optimization_type & 0x02 ) != 0 | With temporal resampling optimization |
| optimization_type > 0 && ( optimization_type & 0x04 ) = = 0 | No spatial resampling optimization |
| ( optimization_type & 0x04 ) != 0 | With spatial resampling optimization |
| optimization_type > 0 && ( optimization_type & 0x08 ) = = 0 | No temporal quality optimization |
| ( optimization_type & 0x08 ) != 0 | With temporal quality optimization |
| optimization_type > 0 && ( optimization_type & 0x10) == 0 | No spatial quality optimization |
| ( optimization_type & 0x10) != 0 | With spatial quality optimization; the pictures for which this SEI message persists have been pre-processed or encoded to reduce unnecessary information or improve the quality of necessary information.(e.g to reduce the amount of noise and remove speckles at the picture-level) |

According to Table 14, the information on the optimization type may include information indicating whether object-based optimization is applied, whether temporal resampling is applied, whether spatial resampling is applied, whether temporal quality optimization is applied, or whether spatial quality optimization is applied.

Table 15 below may show an example of optimization methods that may perform the same functions as those shown in Table 16 but are expressed in a different way. In other words, Table 15 is another example of expressing a plurality of optimization attributes and purposes using a bitmask.

**[Table 15]**

| bitMask | Interpretation |
|---|---|
| 0x01 | Object-based optimization; the pictures for which this SEI message persists have been pre-processed or encoded so that detected objects in the pictures are optimized with respect to other parts of the pictures for the indicated optimization purposes |
| 0x02 | Temporal resampling optimization |
| 0x04 | Spatial resampling optimization |
| 0x08 | Temporal quality optimization |
| 0x10 | Spatial quality optimization; the pictures for which this SEI message persists have been pre-processed or encoded to reduce unnecessary information or improve the quality of necessary information.(e.g to reduce the amount of noise and remove speckles at the picture-level) |

As another embodiment, Table 16 below shows an example of a syntax structure for additionally expressing necessary additional information depending on optimization attributes.

**[Table 16]**

| | |
|---|---|
| encoder_optimization_info(payloadSize ) { | **Descriptor** |
| **optimization_cancel_flag** | u(1) |
| if( !optimization_cancel_flag ) { | |
| **optimization_persistence_flag** | u(1) |
| **optimization_for_human_viewing_flag** | u(1) |
| **optimization_for_machine_analysis_flag** | u(1) |
| **optimization_type** | u(16) |
| if(spatialQualityOptimization_flag ) | |
| { | |
| **spatiai_quality_method_idc** | |
| } | |
| } | |
| } | |

According to Table 16, the encoder optimization information (encoder_optimization_info) may further include a spatial quality optimization method index (spatial_quality_method_idc).

The variable spatialQualityOptimization_flag may indicate whether the optimization_type includes spatial quality optimization. When it is included, the value may be set to 1 and may be derived according to Equation 7.$spatialQualityOptimization _ flag = \left(\left(optimization_type&0\times 10\right)>0\right) ? 1 : 0$

The syntax element spatial_quality_method_idc may represent identification information indicating a type of spatial quality optimization method when the optimization_type includes spatial quality optimization. Table 17 below shows an example of types of spatial quality optimization methods.

**[Table 17]**

| **spatiai_quality_method_ide** | **description** |
|---|---|
| **000** | De-noising filter |
| **001** | Edge preserving filter |
| **010** | Image enhancement processing |
| **011** | Filter bank(array of bandpass filters) |
| **100** | Color vision deficiency optimization |

Table 17 shows an example of defining one optimization method per identifier, and purposes of color vision deficiency activation may be specified and described as shown in Table 18 below.

**[Table 18]**

| **spatiai_quality_method_ide** | **description** |
|---|---|
| **000** | De-noising filter |
| **001** | Edge preserving filter |
| **010** | Image enhancement processing |
| **011** | Filter bank(array of bandpass filters) |
| **100** | Color vision deficiency optimization; Reducing the colors of the video to fit into the perceptible color space of the user. |
| **101** | Color vision deficiency optimization; Transforming the colors of the video to make them distinguishable for the user |

Table 19 below may show an example of optimization methods that may perform the same functions as those shown in Table 17 but are expressed in a different way, and Table 20 below may show an example of optimization methods that may perform the same functions as those shown in Table 18 but are expressed in a different way. In other words, Table 19 is another example of expressing a plurality of optimization methods using a bitmask, and Table 20 may be another example of expressing a plurality of optimization methods/purposes using a bitmask.

**[Table 19]**

| bitMask | Interpretation |
|---|---|
| 0x01 | De-noising filter |
| 0x02 | Edge preserving filter |
| 0x04 | Image enhancement processing |
| 0x08 | Filter bank(array of bandpass filters) |
| 0x10 | Color vision deficiency optimization |

**[Table 20]**

| bitMask | Interpretation |
|---|---|
| 0x01 | De-noising filter |
| 0x02 | Edge preserving filter |
| 0x04 | Image enhancement processing |
| 0x08 | Filter bank(array of bandpass filters) |
| 0x10 | Color vision deficiency optimization; Reducing the colors of the video to fit into the perceptible color space of the user. |
| 0x20 | Color vision deficiency optimization; Transforming the colors of the video to make them distinguishable for the user |

As another embodiment, Table 21 below shows an example of a syntax structure for representing detailed optimization methods.

**[Table 21]**

| | |
|---|---|
| encoder_optimization_info(payloadSize ) { | **Descriptor** |
| **optimization_cancel_flag** | u(1) |
| if( !optimization_cancel_flag ){ | |
| **optimization_persistene_flag** | u(1) |
| **optimization_for_human_viewing_flag** | u(1) |
| **optimization_for_machine_analysis_flag** | u(1) |
| **optimization_type** | u(16) |
| if(ObjectBasedFlag ) | |
| { | |
| **region_ property** | ue(v) |
| } | |
| if(TemporalResamplingFlag) | |
| { | |
| temporal_resampling_type_flag | u(1) |
| num_int_pics | ue(v) |
| } | |
| } | |
| } | |

According to Table 21, the encoder optimization information (encoder_ optimization_info) may further include syntax elements such as region property information (region_property), a temporal resampling type flag (temporal_resampling_type_flag), or information on the number of removed/inserted pictures (num_int_pics).

Similar to the variable spatialQualityOptimization_flag indicating whether spatial quality optimization is applied as described above, a variable ObjectBasedFlag indicating whether object-based optimization is applied, a variable TemporalResamplingFlag indicating whether temporal resampling is applied, a variable SpatialResamplingFlag indicating whether spatial resampling is applied, and a variable TemporalQualityFlag indicating whether temporal quality optimization is applied may respectively indicate that, when their values are 1, the applied optimization_type includes object-based optimization, temporal resampling optimization, spatial resampling optimization, and temporal quality optimization. In other words, when the value of the variable ObjectBasedFlag is 1, the syntax element region_property may be signaled/parsed. When the value of the variable TemporalResamplingFlag is 1, the syntax elements temporal_resampling_type_flag and num_int_pics may be signaled/parsed.

The values of the variables ObjectBasedFlag, TemporalResamplingFlag, SpatialResamplingFlag, and TemporalQualityFlag may be derived as shown in Equations 8, 9, 10, and 11, respectively. $ObjectBasedFlag = \left(\left(optimization_type&0\times 01\right)>0\right) ? 1 : 0$

That is, the variable ObjectBasedFlag may be computed by a logical AND operation between the optimization type information (optimization_type) and a predefined bitmask 0x01.$TemporalResamplingFlag = \left(\left(optimization_type&0\times 02\right)>0\right) ? 1 : 0$

That is, the variable TemporalResamplingFlag may be computed by a logical AND operation between the optimization type information (optimization_type) and a predefined bitmask 0x02.$SpatialResamplingFlag = \left(\left(optimization_type&0\times 04\right)>0\right) ? 1 : 0$

That is, the variable SpatialResamplingFlag may be computed by a logical AND operation between the optimization type information (optimization_type) and a predefined bitmask 0x04.$TemporalQualityFlag = \left(\left(optimization_type&0x08\right)>0\right) ? 1 : 0$

That is, the variable TemporalQualityFlag may be computed by a logical AND operation between the optimization type information (optimization_type) and a predefined bitmask 0x08.

The syntax element region_property may represent properties of a defined region. Tables 22 and 23 below show examples of optimization properties applied to a region of interest (ROI) and a non-ROI region.

**[Table 22]**

| **region_property** | **Interpretation** |
|---|---|
| 0 | Optimization for reducing the amount of information has been applied to regions outside the detected ROI (e.g., low-pass filtering, blurring). |
| 1 | A higher level of quantization than that applied to the detected ROI region has been applied to regions outside the detected ROI. |
| 2 | Information in regions outside the detected ROI is replaced with a specific value. |

Table 22 shows an example in which each property is identified through a defined identifier.

According to Table 22, the syntax element region_property may indicate whether optimization for reducing the amount of information is applied outside the ROI, whether a higher level of quantization than that applied to the ROI is applied outside the ROI, or whether information in regions outside the ROI is replaced with a specific value.

**[Table 23]**

| **bitmask** | **Interpretation** |
|---|---|
| 0x01 | Optimization for reducing the amount of information is applied to regions outside the detected ROI (e.g., low-pass filtering, blurring). |
| 0x02 | A higher degree of quantization than that applied to the detected ROI is applied to regions outside the detected ROI.. |
| Ox04 | Information in regions outside the detected ROI is replaced with a predetermined value. |

Table 23 shows an example in which optimization properties are derived based on a result of a logical AND operation between region_property and a bitmask. In Table 23, when the result of the logical AND operation between region_property and the bitmask is not zero, it may indicate that the corresponding optimization property is applied.

The syntax element temporal_resampling_type_flag is a value for identifying a type of applied resampling. For example, when the value of the syntax element temporal_resampling_type_flag is 0, it may indicate that the applied resampling is subsampling. When the value is 1, it may indicate that the applied resampling is upsampling. Alternatively, the opposite mapping may be defined (i.e., a value of 1 may indicate subsampling, and a value of 0 may indicate upsampling).

The syntax element num _int_pics may indicate the number of frames removed or inserted during the optimization and encoding process when its value is greater than 0. For example, when the resampling type defined by the value of temporal_resampling_type_flag is subsampling, the syntax element num_int_pics may represent the number of frames omitted between frames. Conversely, when the resampling type is upsampling, the syntax element num_int_pics may represent the number of frames inserted between original frames. The range of the syntax element num _int_pics may be limited (e.g., from 0 to 63).

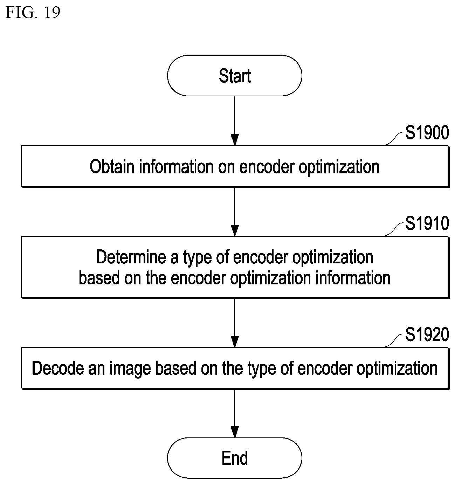

FIG. 19 is a diagram illustrating a decoding method according to an embodiment of the present disclosure.

The operations illustrated in FIG. 19 do not necessarily correspond to essential components of the decoding method according to an embodiment, and at least some of the operations illustrated in FIG. 19 may be omitted or additional operations other than those illustrated in FIG. 19 may be included.

The decoding apparatus may obtain encoder optimization information (S1900).

For example, a processor included in the decoding apparatus may obtain encoder optimization information (encoder_optimization_info).

The encoder optimization information (encoder_optimization_info) may include syntax elements such as an optimization cancel flag (optimization_cancel_flag), an optimization persistence flag (optimization_persistence_flag), an optimization for human viewing flag (optimization_for_human_viewing_flag), an optimization for machine analysis flag (optimization _for_machine_analysis_flag), and information on an optimization type (optimization_type).

The information on the optimization type may include information indicating whether object-based optimization is applied, whether temporal resampling is applied, whether spatial resampling is applied, whether temporal quality optimization is applied, or whether spatial quality optimization is applied.

In addition, the encoder optimization information may further include, based on the information on the optimization type, region property information (region_property), information on a temporal resampling type, or information on the number of removed/inserted pictures (num_int_pics).

The region property information (region_property) may represent properties of a defined region.

The information on the temporal resampling type may include a temporal resampling type flag (temporal_resampling_type_flag). The temporal resampling type flag is a value for identifying a type of applied resampling. A value of 0 of the temporal resampling type flag may indicate that the applied resampling is subsampling. A value of 1 may indicate that the applied resampling is upsampling. However, the present disclosure is not limited thereto. For example, a value of 1 of the temporal resampling type flag may indicate subsampling, and a value of 0 may indicate upsampling.

The information on the number of pictures (num_int_pics) may indicate the number of frames removed or inserted during the optimization and encoding process. When the resampling type defined by the temporal resampling type flag is subsampling, the information on the number of pictures may represent the number of frames omitted between frames due to subsampling. When the resampling type defined by the temporal resampling type flag is upsampling, the information on the number of pictures may represent the number of frames inserted between original frames due to upsampling.

The decoding apparatus may determine a type of encoder optimization based on the encoder optimization information (S1910).

For example, the processor included in the decoding apparatus may determine the type of encoder optimization based on the encoder optimization information, particularly the information on the optimization type (optimization_type).

The information on the optimization type may include information indicating whether object-based optimization is applied, whether temporal resampling is applied, whether spatial resampling is applied, whether temporal quality optimization is applied, or whether spatial quality optimization is applied.

The processor may identify whether object-based optimization, temporal resampling optimization, spatial resampling optimization, temporal quality optimization, or spatial quality optimization is applied based on a logical AND operation between the information on the optimization type (optimization_type) and a predefined bitmask. For example, as shown in Equation 12 below, the respective optimization types may be identified.$\begin{matrix}ObjectBasedFlag = \left(\left(optimization_type&0\times 01\right)>0\right) ? 1 : 0 \\ TemporalResamplingFlag = \left(\left(optimization_type&0\times 02\right)>0\right) ? 1 : 0 \\ SpatialResamplingFlag = \left(\left(optimization_type&0\times 04\right)>0\right) ? 1 : 0 \\ TemporalQualityFlag = \left(\left(optimization_type&0\times 08\right)>0\right) ? 1 : 0 \\ spatialQualityOptimization _ flag = \left(\left(optimization_type&0\times 10\right)>0\right) ? 1 : 0\end{matrix}$

The decoding apparatus may decode an image based on the type of encoder optimization (S1920).

For example, the processor included in the decoding apparatus may identify an applied encoder optimization method based on the type of encoder optimization and decode the image based on the identified encoder optimization method.

For example, the processor may identify whether temporal resampling optimization is applied based on a variable TemporalResamplingFlag indicating whether temporal resampling optimization is applied.

When it is determined that temporal resampling optimization is applied, the processor may parse the temporal resampling type flag (temporal_resampling_type_flag) and the information on the number of pictures (num_int_pics), determine whether the temporal resampling is subsampling or upsampling based on the temporal resampling type flag, and determine the number of removed or inserted pictures based on the information on the number of pictures.

The processor may decode the image based on whether the temporal resampling is subsampling or upsampling and the number of removed or inserted pictures.

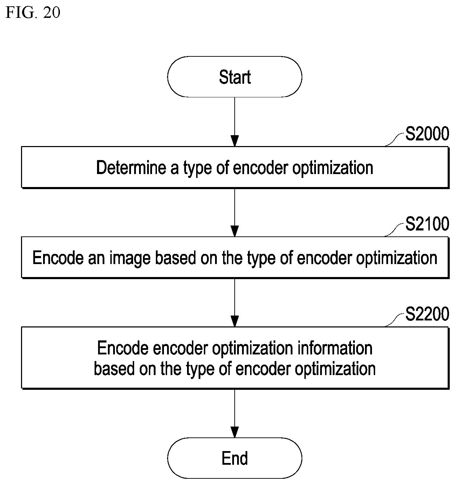

FIG. 20 is a diagram illustrating an encoding method according to an embodiment of the present disclosure.

The operations illustrated in FIG. 20 do not necessarily correspond to essential components of the encoding method according to an embodiment, and at least some of the operations illustrated in FIG. 20 may be omitted or additional operations other than those illustrated in FIG. 20 may be included.

The encoding apparatus may determine a type of encoder optimization (S2000).

For example, a processor included in the encoding apparatus may determine the type of encoder optimization for performing encoder optimization. The encoder optimization type may include object-based optimization, temporal resampling optimization, spatial resampling optimization, temporal quality optimization, or spatial quality optimization.

The encoding apparatus may encode an image based on the type of encoder optimization (S2010).

For example, the processor included in the encoding apparatus may identify an optimized encoder optimization method based on the type of encoder optimization and encode the image based on the optimized encoder optimization method.

The encoding apparatus may encode encoder optimization information based on the type of encoder optimization (S2020).

The encoder optimization information (encoder_optimization_info) may include syntax elements such as an optimization cancel flag (optimization_cancel_flag), an optimization persistence flag (optimization_persistence_flag), an optimization for human viewing flag (optimization_for_human_viewing_flag), an optimization for machine analysis flag (optimization_for_machine_analysis_flag), and information on an optimization type (optimization_type).

The information on the optimization type may include information indicating whether object-based optimization is applied, whether temporal resampling is applied, whether spatial resampling is applied, whether temporal quality optimization is applied, or whether spatial quality optimization is applied.

The processor may generate and encode the information on the optimization type such that whether object-based optimization, temporal resampling optimization, spatial resampling optimization, temporal quality optimization, or spatial quality optimization is applied is identified based on a logical AND operation between the information on the optimization type (optimization_type) and a predefined bitmask.

In addition, the encoder optimization information may further include, based on the information on the optimization type, region property information (region_property), information on a temporal resampling type, or information on the number of removed/inserted pictures (num_int_pics).

The region property information (region_property) may represent properties of a defined region.

The information on the temporal resampling type may include a temporal resampling type flag (temporal_resampling_type_flag). The temporal resampling type flag is a value for identifying a type of applied resampling. A value of 0 of the temporal resampling type flag may indicate that the applied resampling is subsampling, and a value of 1 may indicate that the applied resampling is upsampling. However, the present disclosure is not limited thereto. For example, a value of 1 may indicate subsampling, and a value of 0 may indicate upsampling.

The information on the number of pictures (num_int_pics) may indicate the number of frames removed or inserted during the optimization and encoding process. When the resampling type defined by the temporal resampling type flag is subsampling, the information on the number of pictures may represent the number of frames omitted between frames due to subsampling. When the resampling type is upsampling, the information on the number of pictures may represent the number of frames inserted between original frames due to upsampling.

In addition, a bitstream generated by the image encoding method may be stored in a non-transitory computer-readable recording medium.

In addition, as another example, the bitstream generated by the image encoding method may be transmitted to another device (e.g., an image decoding apparatus). In this case, the transmission of the bitstream may include a process of transmitting the bitstream.

The exemplary methods described in the present disclosure are expressed as a series of operations for clarity of description, but this does not limit the order in which the steps are performed. If necessary, the respective steps may be performed simultaneously or in a different order. To implement the methods according to the present disclosure, additional steps may be included, some steps may be omitted, or a combination of omission and addition of steps may be applied.

In the present disclosure, an image encoding apparatus or an image decoding apparatus performing a predetermined operation (step) may perform an operation (step) of determining whether a condition or situation for performing the predetermined operation (step) is satisfied. For example, when it is described that a predetermined operation is performed when a predetermined condition is satisfied, the image encoding apparatus or the image decoding apparatus may perform an operation of determining whether the predetermined condition is satisfied and then perform the predetermined operation.

The various embodiments of the present disclosure are not intended to list all possible combinations but to illustrate representative aspects of the present disclosure, and the matters described in the various embodiments may be applied independently or in combination of two or more embodiments.

The embodiments described in the present disclosure may be implemented and executed on a processor, a microprocessor, a controller, or a chip. For example, functional units illustrated in the drawings may be implemented and executed on a computer, a processor, a microprocessor, a controller, or a chip. In this case, information (e.g., instruction information) or algorithms for implementation may be stored in a digital storage medium.

Further, the decoder (decoding apparatus) and the encoder (encoding apparatus) to which the embodiments of the present disclosure are applied may be included in a multimedia broadcasting transmission/reception device, a mobile communication terminal, a home cinema video device, a digital cinema video device, a surveillance camera, a video conferencing device, a real-time communication device such as video communication, a mobile streaming device, a storage medium, a camcorder, a video-on-demand (VoD) service providing device, an over-the-top (OTT) video device, an Internet streaming service providing device, a three-dimensional (3D) video device, a virtual reality (VR) device, an augmented reality (AR) device, a video phone device, transportation terminals (e.g., vehicle terminals including autonomous vehicles, robot terminals, aircraft terminals, ship terminals, etc.), and medical video devices, and may be used to process a video signal or a data signal. For example, the OTT video device may include a game console, a Blu-ray player, an Internet-connected TV, a home theater system, a smartphone, a tablet PC, a digital video recorder (DVR), etc.

In addition, the processing method to which the embodiments of the present disclosure are applied may be produced in the form of a program executable by a computer and may be stored in a computer-readable recording medium. Multimedia data having a data structure according to the embodiments of the present disclosure may also be stored in a computer-readable recording medium. The computer-readable recording medium may include all types of storage devices and distributed storage devices in which data readable by a computer is stored. For example, the computer-readable recording medium may include a Blu-ray disc (BD), a universal serial bus (USB), ROM, PROM, EPROM, EEPROM, RAM, CD-ROM, magnetic tape, a floppy disk, and optical data storage devices. In addition, the computer-readable recording medium may include media implemented in the form of a carrier wave (e.g., transmission via the Internet). Further, the bitstream generated by the encoding method may be stored in a computer-readable recording medium or transmitted through a wired/wireless communication network.

Further, embodiments of the present disclosure may be implemented as a computer program product by program code, and the program code may be executed on a computer according to the embodiments of the present disclosure. The program code may be stored on a computer-readable carrier.

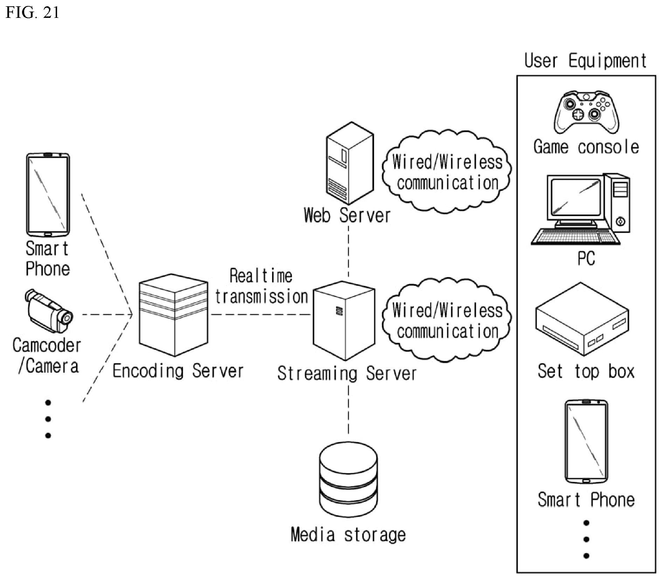

FIG. 21 is a diagram showing an example of a content streaming system to which embodiments of the present disclosure may be applied.

Referring to FIG. 21, the content streaming system to which an embodiment of the present disclosure is applied may broadly include an encoding server, a streaming server, a web server, a media storage, a user device, and a multimedia input device.

An encoding server compresses content input from multimedia input devices such as a smartphone, camera, or camcorder into digital data, generating a bitstream and transmitting it to a streaming server. As another example, when multimedia input devices such as a smartphone, camera, or camcorder directly generate a bitstream, an encoding server may be omitted.

A bitstream may be generated by an image encoding method and/or an image encoding apparatus to which an embodiment of the present disclosure is applied, and a streaming server may temporarily store a bitstream during the process of transmitting or receiving a bitstream.

A streaming server may transmit multimedia data to a user device based on a user request through a web server, and a web server may serve as an intermediary that informs a user of available service. When a user requests a desired service from a web server, a web server may send it to a streaming server, and a streaming server may transmit multimedia data to a user. In this case, a content streaming system may include a separate control server, and in this case, a control server may function to control a command/a response between devices within a content streaming system.

A streaming server may receive a content from a media storage and/or an encoding server. For example, when receiving a content from an encoding server, a content may be received in real time. In this case, to provide a seamless streaming service, a streaming server may store a bitstream for a certain period of time.

Examples of a user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, a digital signage, etc.

Each server within a content streaming system may be operated as a distributed server, in which case data received by each server may be processed in a distributed manner.

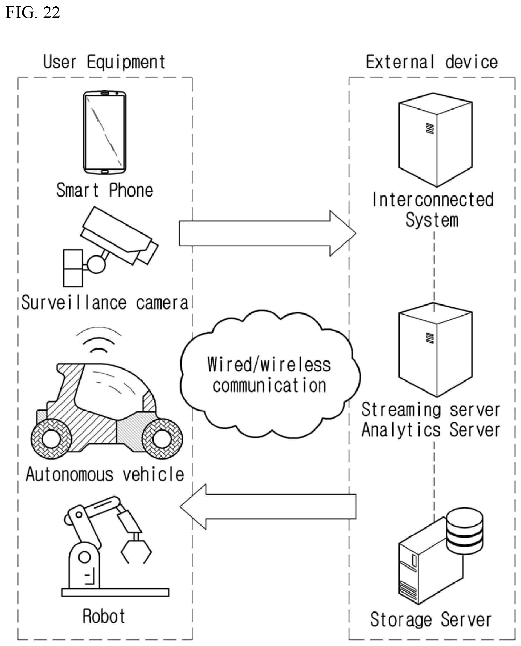

FIG. 22 is a diagram showing another example of a content streaming system to which embodiments of the present disclosure may be applied.

Referring to FIG. 22, in an embodiment such as VCM, a task may be performed by a user terminal or a task may be performed by an external device (e.g., a streaming server, an analysis server, etc.) according to the performance of a device, a user's request, the characteristics of a task to be performed, etc. In this way, in order to transmit information necessary for performing a task to an external device, a user terminal may generate directly or through an encoding server a bitstream including information necessary for performing a task (e.g., information such as a task, a neural network and/or usage).

An analysis server may perform a task requested by a user after decoding encoded information transmitted from a user terminal (or, from an encoding server). An analysis server may transmit a result obtained by performing a task to a user terminal again or to another linked service server (e.g., a web server). For example, an analysis server may transmit a result obtained by performing a task for determining a fire to a firefighting-related server. An analysis server may include a separate control server, in which case a control server may play a role in controlling a command/a response between each device associated with an analysis server and a server. In addition, an analysis server may request desired information from a web server based on information about a task that a user device wants to perform and a task that a user device may perform. When an analysis server requests a desired service from a web server, a web server may transmit it to an analysis server, and an analysis server may transmit data therefor to a user terminal. In this case, the control server of a content streaming system may play a role in controlling a command/a response between each device within a streaming system.

The claims described in the present specification may be combined in various ways. For example, technical features of method claims described in the present specification may be combined and implemented as an apparatus, and technical features of apparatus claims described in the present specification may be combined and implemented as a method. In addition, technical features of the method claims and technical features of the apparatus claims described in the present specification may be combined and implemented as an apparatus, and may also be combined and implemented as a method.

### [Industrial Applicability]

An embodiment according to the present disclosure may be used to encode/decode a feature/a feature map.

## Claims

1. A method of decoding an image, the method comprising:
obtaining encoder optimization information; and
determining a type of encoder optimization based on the encoder optimization information,
wherein the encoder optimization information comprises:
information on an optimization type indicating the type of encoder optimization; and
information on a temporal resampling type indicating whether temporal resampling is one of subsampling or upsampling.

2. The method of claim 1, wherein, based on a value of the information on the temporal resampling type being 0, the temporal resampling is determined as the subsampling, and
based on a value of the information on the temporal resampling type being 1, the temporal resampling is determined as the upsampling.

3. The method of claim 1, wherein the information on the temporal resampling type is obtained based on the information on the optimization type.

4. The method of claim 3, wherein the information on the temporal resampling type is obtained based on a value of a temporal resampling variable, and
wherein the value of the temporal resampling variable is derived based on the information on the optimization type and a predefined bitmask.

5. The method of claim 1, wherein the encoder optimization information further comprises information on a number of pictures indicating a number of pictures excluded or added by the temporal resampling.

6. The method of claim 5, wherein, when the temporal resampling is subsampling, the number of pictures excluded by the temporal resampling is determined based on the information on the number of pictures, and
when the temporal resampling is upsampling, the number of pictures added by the temporal resampling is determined based on the information on the number of pictures.

7. The method of claim 5, wherein the information on the number of pictures is obtained based on the information on the optimization type.

8. A method of encoding an image, the method comprising:
determining a type of encoder optimization; and
encoding encoder optimization information based on the type of encoder optimization,
wherein the encoder optimization information comprises:
information on an optimization type indicating the type of encoder optimization; and
information on a temporal resampling type indicating whether temporal resampling is one of subsampling or upsampling.

9. The method of claim 8, wherein the information on the temporal resampling type comprises a temporal resampling type flag,
wherein a value of 0 of the temporal resampling type flag indicates that the temporal resampling is the subsampling, and
a value of 1 indicates that the temporal resampling is the upsampling.

10. The method of claim 8, wherein the information on the temporal resampling type is encoded based on the information on the optimization type.

11. The method of claim 8, wherein the encoder optimization information further comprises information on a number of pictures indicating a number of pictures excluded or added by the temporal resampling.

12. The method of claim 11, wherein, based on the temporal resampling being subsampling, the information on the number of pictures indicates a number of pictures excluded by the temporal resampling, and
based on the temporal resampling being upsampling, the information on the number of pictures indicates a number of pictures added by the temporal resampling.

13. The method of claim 11, wherein the information on the number of pictures is encoded based on the information on the optimization type.

14. A method of transmitting a bitstream including image information, the method comprising:
determining a type of encoder optimization;
encoding encoder optimization information based on the type of encoder optimization; and
transmitting a bitstream including the encoded encoder optimization information and the image information,
wherein the encoder optimization information comprises:
information on an optimization type indicating the type of encoder optimization; and
information on a temporal resampling type indicating whether temporal resampling is one of subsampling or upsampling.
